(19) Europäisches Patentamt
European Patent Office
Office européen des brevets

(11) Publication number: **0 454 303 A2**

# (12) EUROPEAN PATENT APPLICATION

(21) Application number: **91302604.3**

(22) Date of filing: **26.03.91**

(51) Int. Cl.[5]: **G06F 13/38, H04L 1/00**

A request for correction of the claims has been filed pursuant to Rule 88 EPC. A decision on the request will be taken during the proceedings before the Examining Division (Guidelines for Examination in the EPO, A-V, 2.2).

(30) Priority: **02.04.90 US 502955**

(43) Date of publication of application: **30.10.91 Bulletin 91/44**

(84) Designated Contracting States: **DE FR GB IT NL**

(71) Applicant: **TEXAS INSTRUMENTS INCORPORATED**
**13500 North Central Expressway**
**Dallas Texas 75265 (US)**

(72) Inventor: **Sammet, Frederick A.**
**2801 Rigsbee Drive**
**Plano, Texas 75074 (US)**
Inventor: **McAllister, Kathleen**
**3635 Garden Brook, Apt. No. 12600**
**Farmers Branch, Texas 75234 (US)**

(74) Representative: **Abbott, David John et al**
**Abel & Imray Northumberland House 303-306**
**High Holborn**
**London, WC1V 7LH (GB)**

## (54) Electronic data format conversion system and method.

(57) A system for receiving input data of a first format and converting the data to a second format for output is provided. The system comprises a format identifier for examining a portion of the input data to identifying the first data format and a loader for loading conversion information in response to the format identification. The system further validates the input data by using the loaded conversion information and converts the input data to the second format in accordance with the conversion information.

EP 0 454 303 A2

Jouve, 18, rue Saint-Denis, 75001 PARIS

187
CONVERSION RULES
188
STORE AREAS
189
APPL STORE AREA
RULES
DATA
DATA
185
INPUT FILE
SEGMENT FIELDS
CONVERT
186
APPLICATION RECORDS
190
OUTPUT FILE

FIG. 6

## TECHNICAL FIELD OF THE INVENTION

This invention relates generally to the field of data translation systems, and more particularly to an electronic data conversion system and method for performing the same.

## BACKGROUND OF THE INVENTION

Aside from number crunching, controlling automated machinery, word processing, and myriad other uses, computers are also playing an increasingly important role in business transactions. Business transactions generally involve the exchange of business information, such as purchase orders and acknowledgements, inventory inquiries, invoices, etc. between business partners. With the advent of computers, the exchange of business information has advanced from typed pages of paper to the transfer of information over wires. Because of accuracy, speed and lowered cost, electronic data interchange, or the movement of business information from one business to its business partners electronically, has become the preferred method of making business transactions.

One hurdle standing in the way of electronic data interchange is the language barrier encountered between computers at various business entities. Unfortunately, most business entities prefer their own unique format and method for storing data. Furthermore, most business entities are resistent to any effort to standardize data formats. Therefore, in order to interchange information between business partners, data translation or conversion is often required.

In addition to the existing industrial standards for electronic data interchange (EDI), such as ANSI (American National Standards Institute) X12, EDIFACT (Electronic Data Interchange For Administration) and TDCC (Transportation Data Coordination Committee), there are also proprietary data format standards which are used within each individual business entity. In addition, within each data format standard are various transaction document formats, such as purchase orders, invoices, requests for quotation, shipping schedule, inventory inquiries, etc. Within each transaction document format are mandatory, optional and conditional data fields. It is apparent from the foregoing that there are numerous possible permutations in converting from a transaction document format in one data format to another. Therefore, a truly effective electronic data conversion system must be able to translate any transaction document format in any data format to another. Presently available data conversion systems are capable of translations between two specific data formats. There also exist systems which are able to translate from any one of several data formats to another format, but require tedious and time consuming entry of data conversion relationships. Such systems are also less flexible and may not permit unique data requirements in certain data format standards.

As business entities become more tightly coupled to one another, it is increasingly desirable to perform such data conversion in near real time, so that results from electronic transactions are available immediately. However, existing systems require several translation passes of the input data and typically perform such translations in large batches of data passed nightly or weekly.

Accordingly, a need has arisen for a flexible and universal data format conversion system and method which are capable of converting any transaction document in any format to another format.

A further need has arisen for an electronic data format conversion system and method which permit easy entry of data conversion relationships.

A further need has arisen for an electronic data format conversion system and method which perform the conversion in one pass of the input data, so that data conversion is near real time.

The present invention provides for an electronic data format conversion system and method and is directed to overcoming one or more of the problems as set forth above.

## SUMMARY OF THE INVENTION

In accordance with the present invention, an electronic data format conversion system and method are provided which substantially eliminate or reduce disadvantages and problems associated with prior data translation systems.

In one aspect of the present invention, a system for receiving input data of a first format and converting the data to a second format for output is provided. The system comprises a format identifier for examining a portion of the input data to identifying the first data format and a loader for loading conversion information in response to the format identification. The system further validates the input data by using the loaded conversion information and converts the input data to the second format in accordance with the conversion information.

In another aspect of the present invention, a method for receiving input data of a first format and converting the data to a second format for output is provided. The method comprises the steps of examining the input data to identify the first data format, and loading conversion information in response to the format identification. The system further validates the input data by using the loaded conversion information and converts the input data to the second data format in accordance with the conversion information.

An important technical advantage of the present invention is its capability to convert data in any standard format to an internal format and vice versa without complicated, tedious and time consuming process of entering conversion relationships.

Yet another important technical advantage of the present invention provides for near real time data conversion, which is partially due to its single-pass conversion capability.

## BRIEF DESCRIPTION OF THE DRAWINGS

For a better understanding of the present invention, reference may be made to the accompanying drawings, in which:

FIG. 1 is a top level block diagram of a preferred embodiment of the present invention;

FIG. 2 is a graphical structural representation of an interchange envelope of an electronic data transmission in the ANSI X12 format;

FIG. 3 is a graphical structural representation of an exemplary segment in the ANSI X12 format;

FIG. 4 is a top level flowchart of the preferred embodiment of the present invention;

FIG. 5 is a graphical representation of the tabular structures used in the preferred embodiment of the present invention;

FIG. 6 is a more detailed block diagram of the preferred embodiment of the present invention;

FIG. 7 is a data flow diagram illustrating the data movement between the tabular structures in the preferred embodiment of the present invention;

FIG. 8 is a flowchart of the preferred embodiment of the parse input subroutine;

FIG. 9 is a flowchart of the preferred embodiment of the find next segment subroutine;

FIG. 10 is a flowchart of the preferred embodiment of the identify segment subroutine;

FIG. 11 is a flowchart of the preferred embodiment of the floating segment subroutine;

FIG. 12 is a flowchart of the preferred embodiment of the set loop information subroutine;

FIG. 13 is a flowchart of the preferred embodiment of the validate segment order subroutine;

FIG. 14 is a flowchart of the preferred embodiment of the validate segment fields subroutine;

FIG. 15 is a flowchart of the preferred embodiment of the assert counter control subroutine;

FIG. 16 is a flowchart of the preferred embodiment of the assert control task subroutine;

FIG. 17 is a flowchart of the preferred embodiment of the FILL action subroutine;

FIG. 18 is a flowchart of the preferred embodiment of the STORE subroutine;

FIG. 19 is a flowchart of the preferred embodiment of the WRITE action subroutine;

FIG. 20 is a flowchart of the preferred embodiment of the MATCH subroutine;

FIG. 21 is a flowchart of the preferred embodiment of the MOVE action subroutine;

FIG. 22 is a flowchart of the preferred embodiment of the COUNT subroutine;

FIG. 23 is a flowchart of the preferred embodiment of the COUNT ALL subroutine;

FIG. 24 is a flowchart of the preferred embodiment of the LOAD action subroutine;

FIG. 25 is a flowchart of the preferred embodiment of the SUM subroutine;

FIG. 26 is a flowchart of the preferred embodiment of the LOG action subroutine;

FIG. 27 is a flowchart of the preferred embodiment of the JOIN subroutine;

FIG. 28 is a flowchart of the preferred embodiment of the COMPARE STORE DATA action subroutine;

FIG. 29 is a flowchart of the preferred embodiment of the REMOVE FROM STORE subroutine;

FIG. 30 is a flowchart of the preferred embodiment of the SET FIRST SEGMENT FLAG action subroutine;

FIG. 31 is a flowchart of the preferred embodiment of the TURN OFF TYPE TWO COUNT subroutine;

FIG. 32 is a flowchart of the preferred embodiment of the INIT FIELD action subroutine;

FIG. 33 is a flowchart of the preferred embodiment of the MAP subroutine;

FIG. 34 is a flowchart of the preferred embodiment of the CONDITIONAL action subroutine;

FIG. 35 is a flowchart of the preferred embodiment of the COUNT OUT subroutine;

FIG. 36 is a graphical representation of the preferred embodiment of a portion of the control table; and

FIG. 37 is a graphical representation of the preferred embodiment of a portion of the conditional table.

## DETAILED DESCRIPTION OF THE INVENTION

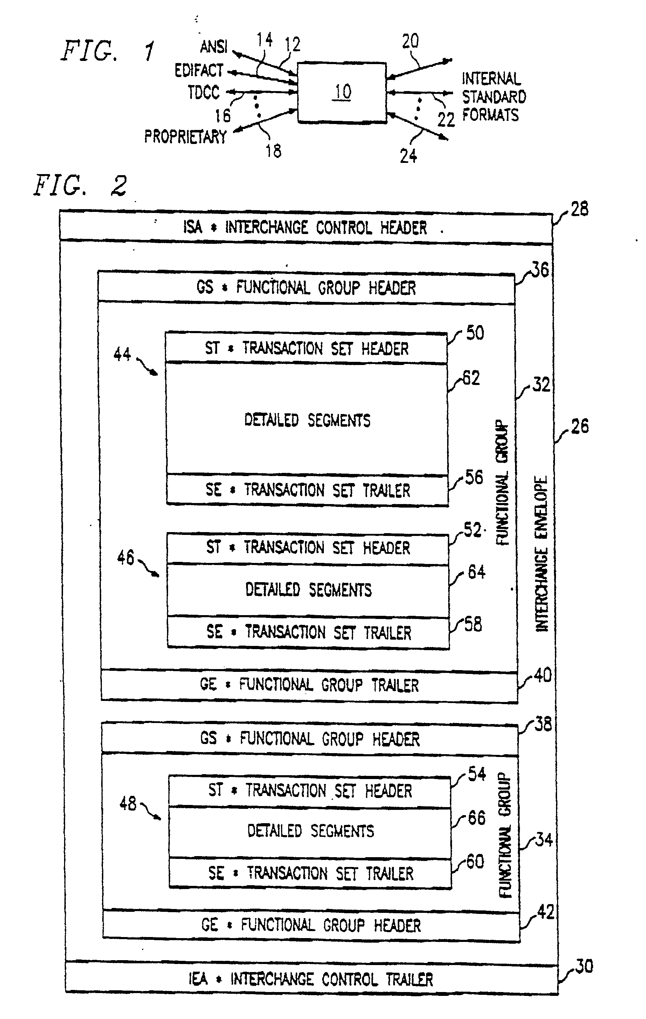

Referring to FIG. 1, a simplified block diagram of an electronic data format conversion system 10 that is capable of receiving electronic documents in a multitude of formats 12-18. These formats may include industry set standards set by organizations such as ANSI (American National Standards Institute), and standards such as EDIFACT (Electronic Data Interchange For Administration) and TDCC (Transportation Data Coordination Committee). In addition, documents in data formats that are proprietary to a trading partner are also acceptable and convertible to documents of internal formats.

The industry standard formats are usually identifiable by the contents of the first few bytes of the document. For example, any document of the ANSI format begins with the characters "ISA," and any EDIFACT document begins with either "UNA" or "UNB" at the start of the file.

On the other hand, since proprietary formats are not ruled by any standard, proprietary documents may begin with any sequence of data. Therefore, documents in proprietary formats may be required to be preceded by a predetermined sequence of data which identifies the trading partner and the data format. In addition, the preceding data sequence may also include security measures such as passwords.

Electronic data format conversion system 10 receives electronic data file transmissions in ANSI 12, EDIFACT 14, TDCC 16 and proprietary 18 formats and translates them into files having internal data formats 20-24. Similarly, system 10 is also capable of performing the conversion process in reverse, i.e. from any internal document format 20-24 to an industry standard format or a trading partner's proprietary format 12-18.

In order to illustrate the operation of electronic data conversion system 10, it is necessary to examine the work piece, namely the data, it manipulates. Referring to FIG. 2, a graphical representation of an exemplary ANSI X12 data format for electronically transmitting a series of business transactions is shown. The electronic communication session contains one or more conceptual interchange envelopes 26, each beginning with an interchange control header segment 28 and ending with an interchange control trailer segment 30. Interchange control header segment 28 is preceded by segment identifier "ISA." Interchange control trailer segment 30 is preceded with segment identifier "IEA." Segment ISA 28 is said to be loop level one, since a loop consisting of one interchange envelope may be repeated within an electronic transmission. Segment IEA 30 is said to be the loop-end of segment ISA 28, since segment IEA 30 closes the loop which began at segment ISA 28. In addition, the number of occurrences of a loop formed by segments ISA 28 and IEA 30 within an electronic transmission is virtually unlimited.

Interchange envelope 26 is shown containing two functional groups 32 and 34. Functional groups 32 and 34 begin with functional group header segments 36 and 38, respectively, and end with functional group trailer segments 40 and 42, respectively. Functional group header segments 36 and 38 are tagged with identifier "GS," while trailer segments 40 and 42 are tagged with identifier "GE." Segment GS 36 is at loop level two, and segment GE 40 is the loop-end of the loop which began with segment GS 36. The number of functional group 32 occurrences is also virtually unrestricted.

Each functional group 32 and 34 contains transaction sets of the same type. A transaction set may be defined as a collection of data that represents a business document, for example, a purchase order or an invoice. Functional group 32 includes transaction sets 44 and 46, and functional group 34 includes transaction set 48. A transaction set 44-48 has transaction set header 50-54 and trailer 56-60 segments and is identified by characters "ST" at the beginning and "SE" at the end thereof. Segments ST 50-54 are at loop level three, and segments SE 56-60 are respective loop-ends of each loop. The number of occurrences of transactions in a functional group is not restricted. Within each transaction set 44-48 are a multitude of detailed segments 62-66.

Segments 62-66, including the header and trailer segments of the envelope, functional groups and transaction sets, are delimited by a predetermined character, such as "|." The segment delimiter character may be selected by the sending party and the receiving party need not have prior knowledge of the segment terminator to receive data. Each segment has a specific position in the sequence within the transaction set. Segments further have requirement designators defining whether a certain segment is mandatory, optional or floating. Mandatory segments must appear in the transaction set at least once; optional segments may or may not appear; and floating segments may appear anywhere within the transaction set, and therefore do not have a specific location in the sequence. Segments must follow this order with the exception of floating segments. Additionally, certain segments may be repeated in a transaction set, and groups of segments may be repeated as loops.

| SEG. ID | NAME | REQ. DES. | MAX. USE | COMMENTS |
|---|---|---|---|---|
| | **AREA 1** | | | |
| ST | Transaction Set Header | M | 1 | |
| BPS | Beginning Segment for Payment Order/ Remittance Advice | M | 1 | |
| NTE | Note/Special Instruction | F | 100 | |
| CUR | Currency | O | 1 | |
| REF | Reference Numbers | M | 5 | |
| DTM | Date/Time Reference | M | 10 | |
| N1 | Name | O | 1 | Loop N1 is optional but, if used, segment N1 is mandatory. |
| N2 | Additional Name Information | O | 2 | |
| N3 | Address Information | O | 2 | |
| N4 | Geographic Location | O | 1 | |
| REF | Reference Numbers | O | 12 | |
| PER | Administrative Communications Contact | O | 3 | |
| | **AREA 2** | | | |
| LS | Loop Header | M | 1 | |
| N1 | Name | M | 1 | |
| RMT | Remittance Advice | M | 1 | |
| CUR | Currency | O | 1 | |
| REF | Reference Numbers | O | 5 | |
| DTM | Date/Time Reference | O | 10 | |
| LE | Loop Trailer | M | 1 | |
| | **AREA 3** | | | |
| SE | Transaction Set Trailer | M | 1 | |

**TABLE 1**

Refer to TABLE 1 for a transaction set example for a payment order or remittance advice, which may be used to order a financial institution to make payment to payee on behalf of the sending party. The segments of the transaction are listed in the sequence of appearance, where the segment identifiers are in the first column and the segment names are in the second column. The requirement designation of each segment is in column three, where "M" designates mandatory, "O" optional and "F" floating. Furthermore, the maximum number of usages of each segment is in column four.

Several characteristics of a transaction set are well illustrated in TABLE 1. Note that the transaction set begins and ends with an ST and an SE segment respectively, and contains mandatory, optional and floating segments. For example, segments ST and BPS are mandatory segments, segment CUR is optional, and serpent NTE is a floating segment and may appear 100 times in succession each time it appears. This transaction set further has three loops, one of which is nested within another loop. The first loop begins with segment N1 in area one and ends with segment PER in the same area. The second loop begins with segment N1 in area two and ends with segment DTM. The nested loop is within the second loop and begins with segment RMT and ends with segment DTM. Segments consist of logically related data elements or fields that are delimited by a predetermined character, such as "*". Similar to the segment terminator, the field terminator may be selected by the sending party and the receiving party need not have prior knowledge thereof. Each field has a specific position within a segment and its two primary attributes are length and type. Furthermore, each field has a requirement designator defining its need to appear within the segment. A field designated as mandatory (M), shall appear in the segment; a field designated as optional (O), may contain data or may appear as a field of length zero or may not be included at all in the segment in certain situations; and a field designated as conditional (C), whose presence is dependent on the presence or value of other fields in the transaction set.

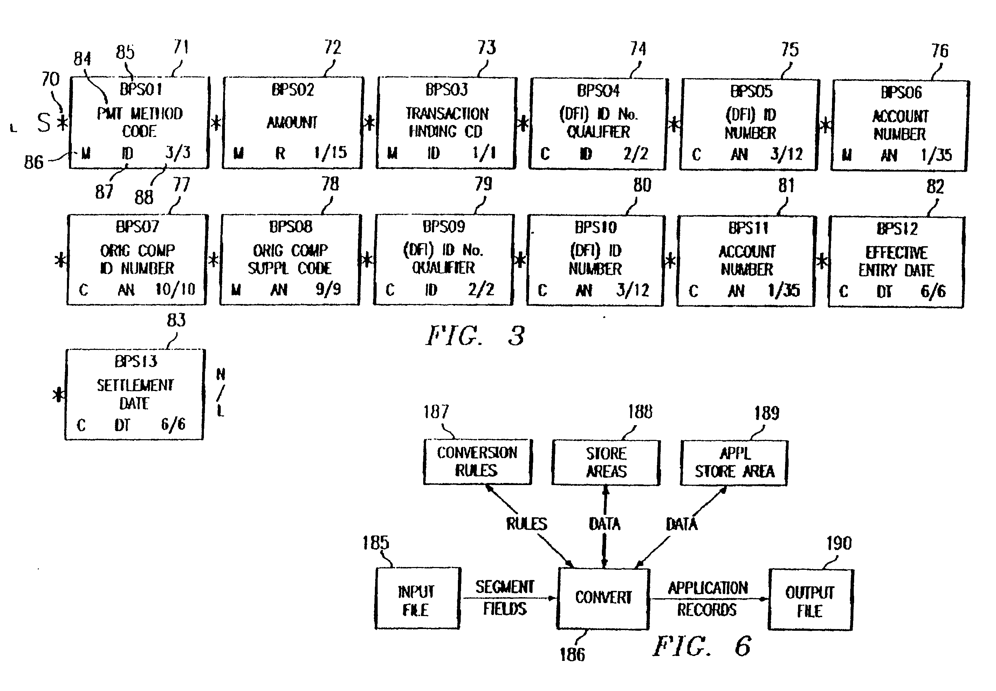

Referring to FIG. 3, the fields of an exemplary segment BPS, which was the second segment in the transaction set shown in TABLE 1, are shown. Segment BPS begins with the characters "BPS" to identify the segment, is followed by a field delimiter "*" 70, and further includes fields 71-83. Fields 71-83 of serpent BPS include information such as the method of payment, amount, account number, etc. The exact content of fields 71-83 will not be discussed further herein, although several characteristics of the fields are of interest.

Referring to exemplary field 71, several components thereof are shown. Field 71 is identified by a title 84 and a reference designator 85. The titles, such as title 84 "Payment Method Code" of field 71, indicate what information is included in the respective field. The field reference designator, such as designator 85 "BPS01" of field 71, is a structured code that indicates the segment in which the field is used and its sequential position within that segment. Therefore, "BPS01" indicates that field 71 is at the first position in segment BPS.

Each field has further associated therewith a requirement designator, such as designator 86, which indicates that field 71 is mandatory. In segment BPS, fields 72 and 73 are further indicated as mandatory; fields 74, 75, 77, 79, 80, 81, 82 and 83 are conditional; and fields 76 and 78 are optional.

A field may further be one of six types: numeric (Nn), decimal (R), identifier (ID), string (AN), date (DT), or time (TM). For example, field 71 is of type identifier, field 72 is of type decimal and field 75 is of type string. An identifier field contains a value from a predefined list of values.

Another attribute associated with each field is its length, or the minimum to maximum number of character positions available to represent the contents of a field. For example, field 71 has a minimum length of 3 and a maximum length of 3, as indicated by field length 88.

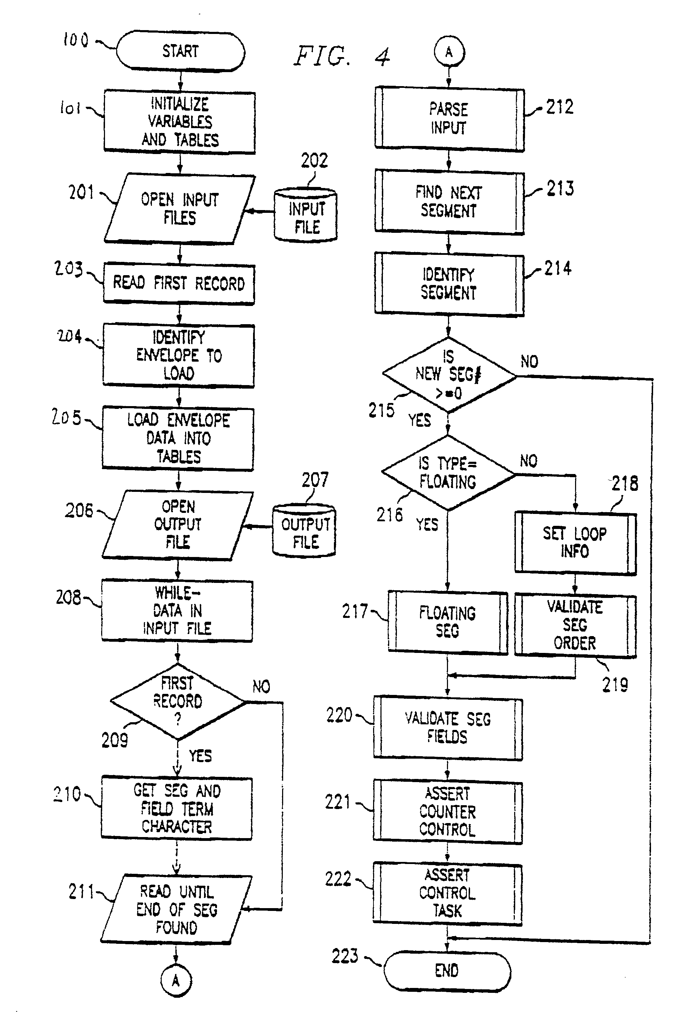

Referring presently to FIG. 4, where a top level flow chart of the preferred embodiment of the present invention is shown. The electronic data conversion main program begins at block 100 and starts by initializing all variables and tables in block 101. The tables will contain information on the data format of the input file and enable subsequent data conversions to be made.

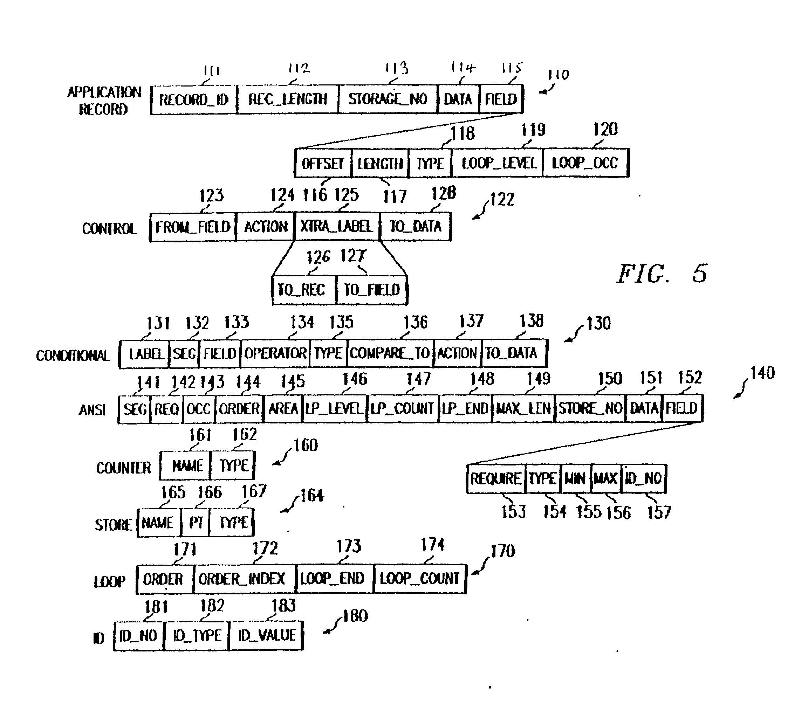

Referring to FIG. 5, a graphic representation of each table and the fields of each table is shown. Application table 110 is a structural area which will be used to store data and information associated therewith for the output. In entry 111 of table 110 is stored the identifier of each record or segment. Entry 112 contains the length of each record and entry 113 contains the storage number or the index of the application records. Entry 114 of table 110 contains a flag which indicates whether data is present in the record. A last entry 115 of table 110 contains a field table, including entries 116-120, which may be indexed to access field information stored therein. Entry 116 contains the offset of the field from the beginning of the record. In addition, entry 117 contains the length of the field and entry 118 contains the type of the field that will be in the application record in the output file. Furthermore, because there also exists the possibility of loops formed by repeated fields in the application record, loop information such as loop level and loop occurrence are stored in entries 119 and 120. It is important to note that although the application records have characteristics similar to the input file, such as fields, field types and loops, the application record characteristics may be different from those of the input file.

Stored in table 122 are control information and rules associated with how the data are manipulated in order to perform data conversion. Entry 123 of control table 122 contains the field of a segment from which the data originated or a zero if the data is to come from a segment. Entry 124 contains the action code representing the action to be performed on the data. The next entry may be entry 125 which contains an extra label which is used to reference the store table or two entries 126 and 127, which contain, respectively, the destination record and field of the data. A last entry 128 contains data labels used during the conversion process.

There is further a table 130 which contains any conditional information associated with a segment or field. Entry 131 contains a label identifier of the conditional field; entry 132 contains the segment number of the field; entry 133 contains an operator that performs some comparison in the condition, such as equal, less than, greater than and not equal; and entry 134 contains a numeral which indicates how the value in entry 135 is to be used, such as the actual value of entry 135 or to use the value in entry 135 to index into store table 164. Ultimately, entry 135 will reveal a value which is to be compared to the data to be converted. Entry 136 contains an action code which represents the action to take if the comparison in the conditional yields true. Finally, entry 137 contains a data label used during the conversion process to index into store table 164 or to another entry in conditional table 130.

Information about a particular data format type is contained in data format standard table 140 and, in this example, is the ANSI data format. Entry 141 contains the segment names; entry 142 contains the segment requirement designator, which indicates mandatory, optional or float; entry 143 contains the number of occurrences of the segment; entry 144 contains the segment order, which indicates the sequence the segment is in interchange envelope 26 (FIG. 2); and entry 145 contains an area designator, which indicates whether the segment is a header, trailer or detailed segment. Entries 146-148 contain the loop level, loop count and loop end of the segment entry, respectively. Furthermore, when used to translate from an internal format to extend standard for outbound data, table 140 contains the maximum length of the segment into an output buffer in entry 150, and the flag which indicates if data is present in the segment in entry 151. Finally, information on the fields in each segment may be indexed by the field order number into a field table 152. Field table 152 includes entries 153-157. Entry 153 contains the requirement designator of the field, such as mandatory, optional or conditional; entry 154 contains the field type, such as ID, numeric, decimal, string, date and time; entries 155 and 156 contain the minimum and maximum lengths of the field; and sub-entry 157 contains the identifier for each field.

Counter table 160 is another structure used to store control related information. First entry 161 of table 160 contains a label which is used to reference store table 164. A second entry 162 contains a numerical value which represents the type of occurrence to be counted, such as count only input segments, only output records, or both input segments and output records.

Store table 164 is a structure used to store the name and type of data and also provides pointers into a store area where the data is stored. Entry 165 contains the name, entry 166 contains the pointer, and entry 167 contains the type of data stored in the store area.

As described above, there may exist looping segments or fields in an electronic document. Table 170 is a structure containing loop information created during the segment verification process to keep track of incoming segment loops. Entry 171 contains the order of the loop, entry 172 the order index, entry 173 the loop end and entry 174 the loop count.

For each data item of the type ID, there is associated a predefined list of ID values. In table 180, this information is stored and accessed for use during the verification process. Entry 181 contains the ID number, entry 182 the ID type and entry 183 contains a list of ID values for each ID number. When no ID value is associated with a particular ID number, a predetermined character is contained in entry 183 to indicate this fact.

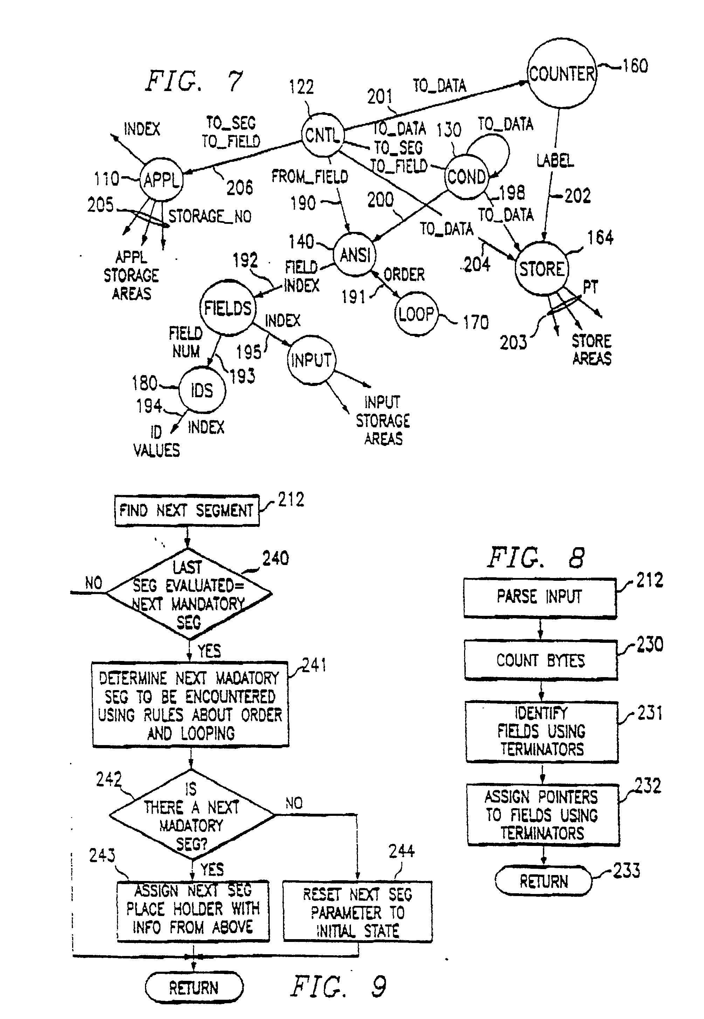

Referring to FIG. 6, a block diagram shows the major components of the electronic data format conversion system 10. An input file 185 containing electronic data is received by a convert block 186. Convert block 186 represents the software which performs the data conversion. The electronic data in input file 185 may be divisible into groups of data or segments, and each segment is composed of smaller units of data or fields. Therefore, the data in input file 185 is read into convert 186 in segments and fields.

Upon receiving the first segment of input file 185, a determination is made as to what format the data in input file 185 are organized. The data may be in ANSI, EDIFACT, proprietary or any other format. Depending on the data format of input file 185, a set of conversion rules 187 describing the interchange envelope levels ISA, GS, GE, IEA is loaded and used to determine how to process the header and trailer segments. During the conversion process, conversion rules on the transaction set and detailed segments are loaded when needed. Conversion rules 187 include tables 122, 130, 140, 160, 170 and 180 of FIG. 5. Conversion rules are formulated in advance on a user-friendly workbench using object-oriented programs, such as Matrix Layout, and the conversion rules are formulated for each data format that electronic data format conversion system 10 may encounter.

Following specifications set forth in conversion rules 187, the data are converted, such as truncating a numerical value to a lesser number of bits, converting a character string to a number and an unpacked number to a packed number. In addition, the data are stored in application store area 189 associated with application records or in temporary store areas 188, which holds the data and information associated therewith until the data can be moved to the output. Records are moved from application store areas 189 to output file 190 when instructed by actions in control table 122. Output file 189 contains the converted data at the end of the conversion process.

Referring to FIG. 7, a graphical representation of the relationships between each of the tables 110, 122, 130, 140 160, 164, 170 and 180 which were described in conjunction with FIG. 5 are illustrated. From control table 122 an index equal to the serpent number may be used along with from_field entry 123 to reference data stored in ANSI table 140, as indicated by arrow 190. Loop table 170 may be referenced by the order entry 144 in ANSI table 140 (arrow 191). Arrow 192 indicates the access route to field table 152 in ANSI table 140 by using a field index number which is equal to the order of appearance of each field in a particular serpent. From the ID numbers of each field in entry 157, ID table 180 may be indexed (arrow 193) to obtain the ID values for each ID number, as indicated by arrow 194. Using the field index, an input table (not shown) may be accessed (arrow 195) to obtain pointers which point to the beginning of each field in the current segment being processed. The field_start pointers used together with field indices can access incoming individual fields stored in an input storage area in order to validate them (arrow 196). The previously described access routes are used during the validation process, which will be described in more detail below.

The labels in to_data entry 128 of control table 122 may be used to index into conditional table 130 (arrow 197) when the action in entry 124 indicates a conditional situation is to be tested. In response, the action in entry 137 of conditional table 130 may refer to entries in store table 164 by using to_data (arrow 198), or to another entry in conditional table 130. In addition, it may be necessary to refer to segment and field information in ANSI table 140 by using segment and field numbers, as indicated by arrow 200.

Similarly, the labels in to_data entry 128 of control table 122 may also be used to index into counter table 160 (arrow 201) when the action desired is counter related, such as start counting input segments, or shutting off a particular counter. As described above, counter table 160 itself does not contain the actual count values. The count values are stored in a store area, which counter table 160 may access by using names stored in entry 161 to access store table 164 (arrow 202). Store table 164, in turn, accesses the values in the store area by using pointers in entry 166, as indicated by arrow 203.

The action specified in control table 122 may also refer to information in the store area and may use a label in to_data entry 128 for indexing purposes (arrow 204). Data are moved to the application storage areas when instructed by appropriate actions in control table 122. The application storage areas are indexed by storage numbers (arrows 205) contained in entry 113 of application table 110, and may in turn be accessed by control table 122 by using to_record and to_field values in entries 126 and 127 as indices, as indicated by arrow 206.

Returning to FIG. 4 shown in block 201, an input file 202 containing the electronic data to be converted is opened for access by system 10. By opening the file, a number of file characteristics may be determined, such as whether the file is stored in fixed or variable blocks, block size and the length of logical records. A fixed number of bytes is first read in, as shown in block 203. Typically, the fixed number of bytes contains the first record or segment of the interchange envelope. From the first segment, a determination is made as to what data format is present in the input file, and more importantly, what interchange envelope information to load into the tables for the data verification and conversion, as shown in block 204. Subsequently, the envelope data are loaded into the tables in block 205. In block 206, an output file 207 is opened to prepare for receiving the converted data. Execution then enters into a while loop 208, which includes a code that is executed as long as there are still unprocessed data left in the input file.

While loop 208 begins by determining whether the presently read record is the first record of input file 204, as shown in block 209. If it is the first record, execution proceeds to block 210, where segment and field terminators or delimiters are determined from the first record, if necessary. Whether the present record is the first record or not, code execution proceeds to block 211, where all data in the segment are read. The data in the segment are parsed to determine the locations of each field that makes up the segment and pointers are assigned to each field, so that they may be easily accessed.

Subsequently, in block 213, the next expected mandatory serpent in ANSI table 140 (FIG. 5) is located in ANSI table 140 and place holders are used to indicate its location in the table. In block 214, the present segment is identified in ANSI table 140 and the index into ANSI table 140 where the present segment is located is determined. If the segment number or the index into ANSI table 140 is greater than zero, as shown in block 215, it indicates that the present segment is found in the table and the type of the segment as indicated in table 140 is determined. If ANSI table 140 indicates that the present segment is a floating segment (block 216) then execution proceeds to block 217, where the floating segment is processed. Since a floating segment may appear anywhere, it must be processed separately.

On the other hand, if the segment is not a floating segment, then execution proceeds to block 218, where the looping condition of the present segment is determined and stored in loop table 170, if applicable. In block 219, the order in which the present segment appears is validated. The next step is to validate each field within the serpent, as shown in block 220. In block 221, counter control is asserted to increment the count of incoming segments, and in block 222, control task is asserted to begin referring to the control tables to determine the conversion actions to take. While loop 208 ends at block 222, but is re-executed until all data in input file 204 are exhausted.

Details of various portions of the flowchart in FIG. 4 are shown in flowcharts in FIGS. 8-37. Referring to FIG. 8, parse input shown in block 212 begins by counting the number of bytes in the present segment, as shown in block 230. Next, the fields are identified using the field terminators, as shown in block 231. Pointers are also assigned to point to the beginning of each field, which are demarcated by the field terminators and further, the lengths of each field are determined, as shown in block 232. Parse input 212 subsequently terminates in block 233 and returns to the main program.

Details of find next segment 213 of the main program are shown in FIG. 9. The last segment that was evaluated is compared against the next expected mandatory segment in ANSI table 140, as shown in block 240. If they are not the same, then the last evaluated segment may be an optional or floating segment, which indicates that the next expected mandatory segment is not yet read in and execution returns. If they are the same segment, execution proceeds to block 241, where ANSI table is searched to find the next mandatory segment that is to be read in. If a next mandatory segment exists (block 242), a next segment place holder is assigned to the next expected mandatory segment, as shown in block 243. The assignment of the next segment place holder may be done in a number of ways, such as copying the segment name, order, loop level and other segment information to a next segment variable structure, or assigned a next segment pointer to point to the location of the current segment in ANSI table 140. If no next mandatory segment exists, such as when the last few segments in a transaction set are optional or floating, then the next segment place holder is reset to the beginning of the transaction set, as shown in block 244. Find next segment 213 terminates in block 243 and returns to the main program.

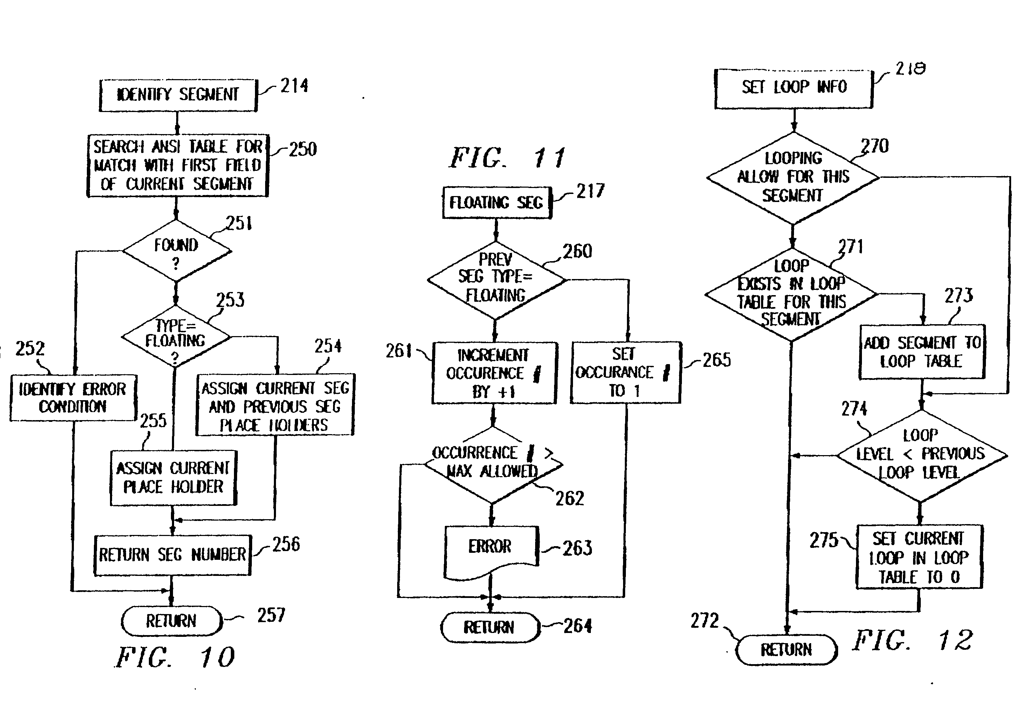

FIG. 10 shows a more detailed flowchart of identify segment 214. Identify segment 214 begins in block 250 by searching ANSI table 140 for the first field of the current segment. If it is not found (block 251), the error condition is identified, a notification is made thereof and execution returns to the main program. If a corresponding field is found which matched the first field in block 251, it is determined whether the segment is of the floating type, as shown in block 253. If it is a floating segment, then a current place holder is assigned to the matched segment in table 140, as shown in block 254. If it is not a floating segment, then the previous and current segment place holders are assigned to the last current segment and the current segment, respectively, as shown in block 255. Subsequently, in block 256, the segment number or the index into ANSI table 140 to access the current segment is returned to the main program, and identify segment 214 terminates and returns in block 257.

As mentioned above, since floating segments may appear anywhere in a transaction set, they are treated somewhat differently than the other types of segments. FIG. 11 shows a flowchart which outlines the processing of floating type segments in more detail. Floating segment 217 begins in block 260 and determines whether the type of the previous segment was also floating. If so, then in block 261 a variable occurrence, which records the number of floating segments appearing contiguously, is incremented by one. The occurrence value is then compared with a maximum number of contiguous floating segments that are allowed, as determined from ANSI table 140, to determine if the maximum limit is exceeded, as shown in block 262. If the maximum limit is exceeded, an error condition is identified and reported in block 263. If the occurrence of contiguous floating segments does not exceed the maximum limit, then execution returns to the main program, as shown in block 264. If, on the other hand, the previous segment type is not floating, as determined in block 260, the occurrence variable is set equal to one, which counts the present floating segment as the first occurrence of a floating segment at the present location.

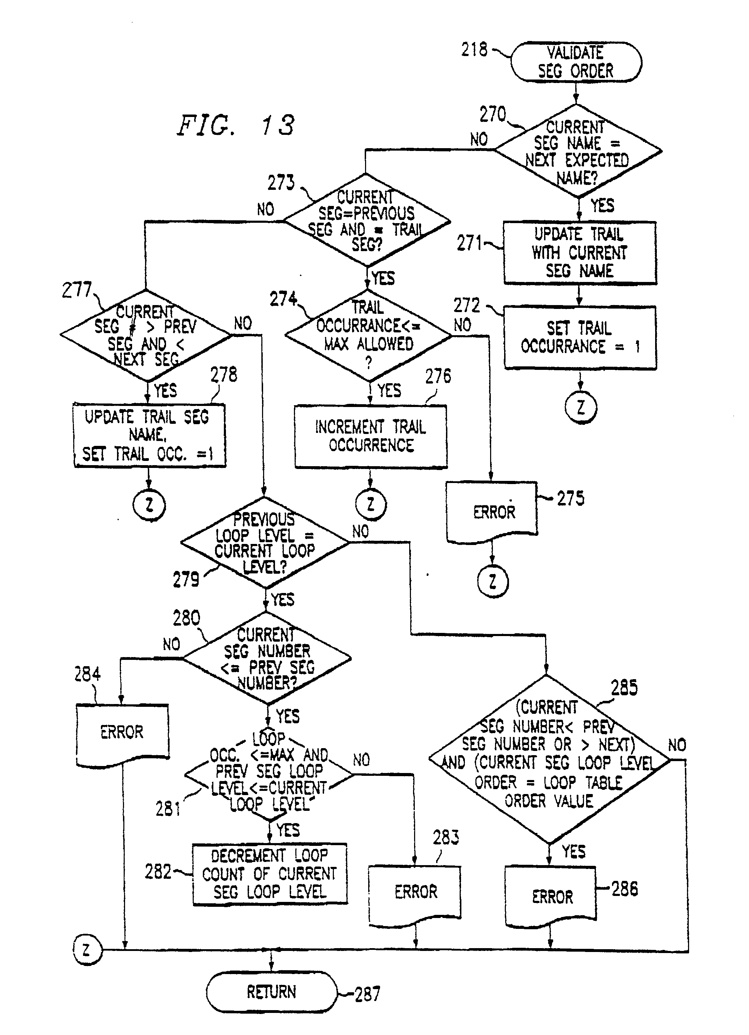

Set loop information 218 is shown in more detail in FIG. 12. Whether or not looping is allowed for the current segment is verified by examining the corresponding segment entry in table 140, as shown in block 270. If looping is allowed, loop table 170 is examined to determine whether an entry exists for the current segment, as shown in block 271. If an entry already exists, then execution returns in block 272, otherwise execution proceeds to block 273. In block 273, loop table 170 is updated with looping information of the current segment and execution proceeds to block 274. Similarly, if it was determined in block 270 that looping is not allowed for this segment, execution also goes to block 274, where the current segment loop level is compared with the loop level of a previous segment. If the current segment loop level is less than that of the previous one, then the current loop information in loop table 170 is reset, as shown in block 275, else, execution returns to the main program.

FIG. 13 show in more detail the validate segment order routine 218, which determines whether the present segment is in the correct order in the electronic transaction. A comparison is first made between the current segment name and the next expected segment name, as shown in block 270. If the two segment names are equal, then the current segment is the next mandatory segment in table 140, and a trail segment variable is updated with the current segment (block 271). The trail segment variable is another place holder used to indicate the last segment of a succession of segments. Additionally, a trail occurrence variable keeps the count of the number of segments in a succession at each location, and is set equal to one, as shown in block 272.

If the comparison in block 270 determined that the current segment name is not equal to the next expected segment name, then execution proceeds to block 273 where the current segment name is compared to the previous segment name and the trail segment name. If the comparison in block 273 determines that the current segment name is equal to both the previous segment name and the trail segment name, then the current segment is the same as the preceding segment and the trail occurrence is checked against the predetermined maximum limit set forth in ANSI table 140, as shown in block 274. If the maximum limit is exceeded, an error condition is declared, as shown in block 275 and execution returns to the main program. If, however, the trail occurrence is below the maximum limit, then the trail occurrence is incremented by one, and execution returns to the main program.

If the comparison in block 273 is negative, execution proceeds to block 277 and if the current segment number, which is equal to the order of the segment within the transaction sequence, is larger than that of the previous segment and less than that of the next segment, then the current segment may be an optional segment. Accordingly, the trail serpent is updated with the current segment and the occurrence thereof is set equal to one, as shown in block 278, and execution returns to the main program. If the comparison in block 277 indicates that the current segment number does not satisfy the conditions set forth therein, then if the previous loop level is equal to the current loop level (block 279) and the current segment number is less than or equal to the previous segment number (block 280) and the current segment loop occurrence is less than or equal to the maximum limit and the previous segment loop level is less than or equal to the current loop level (block 281) then the loop count of the current segment loop level is decremented by one (block 282). If the comparison in block 281 is not true, then an error condition is identified and reported in block 283, and execution returns to the main program. If the comparison in block 280 is not true, then another error condition is identified and reported in block 284, and execution returns to the main program.

If, in block 279, it was determined that the previous loop level is not equal to the current loop level, then execution proceeds to block 284. If the current segment number in block 284 is less than the previous segment number or if the current segment number is greater than the next segment number and the current segment loop level order is not equal to the loop table order, then an error has occurred and is reported in block 285. If the conditions in block 284 were not satisfied, then execution proceeds to block 286 and returns to the main program.

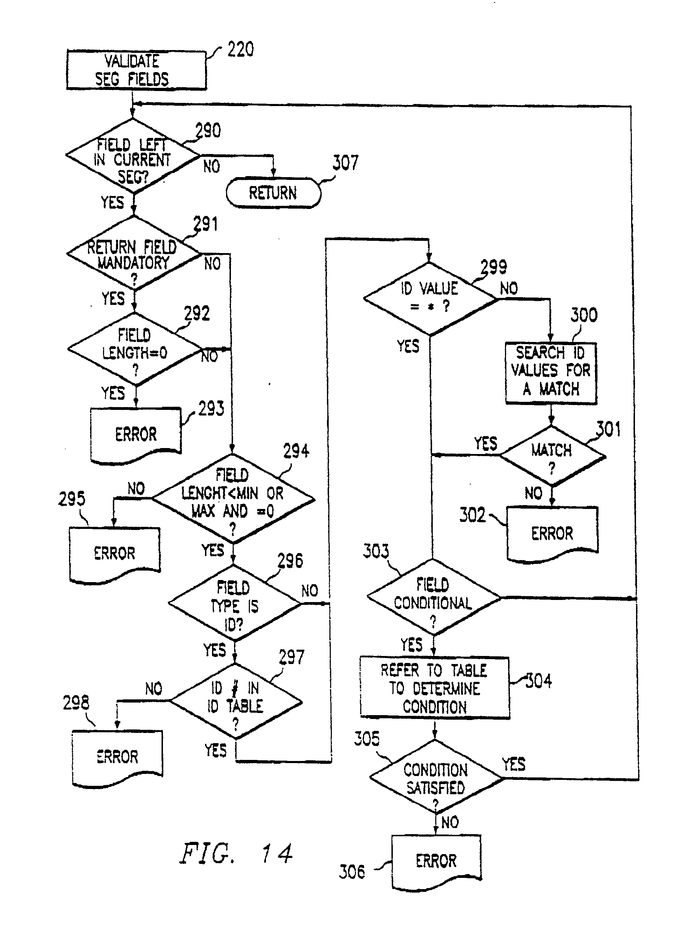

After the segment order has been verified, each of the segment's fields are validated in validate segment fields routine 220 shown in FIG. 14. A determination is first made to ensure there is at least one field left in the current segment that has not been validated. If so, execution proceeds to block 291 where it is determined whether the first unvalidated field in the segment should be a mandatory field by referring to ANSI table 140. If the field should be mandatory, but its length is equal to zero (block 292), then a mandatory field is missing and an error condition is identified and reported, as shown in block 293. If the field is not mandatory or its length is greater than zero then execution proceeds to block 294.

In block 294, the field length is checked to see whether it is non-zero and is outside a predetermined range determined by a maximum and minimum length. If so, the length of the current field is invalid and the error condition is reported, as shown in block 295. If the field length is valid, then if the field is of type field identifier (ID), as determined in block 296. The ID number is checked to determine whether it is a valid number by search ID table 180, as shown in block 297. If the ID number is not listed in ID table 180, then an error condition is identified and reported, as shown in block 298. Otherwise, the first ID value for the ID number as stored in ID table 180 is checked to determine whether it is equal to "*" (block 299). If not, execution proceeds to block 300, where the list of ID values corresponding to the ID number is compared with the data in the input field to find a match (block 301). If a match does not exist, then an error is identified (block 302). If the data in the input field is equal to an ID value in ID table 180, then execution proceeds to block 303. Similarly, if the first ID value is equal to "*" the ID value is also valid and execution also proceeds to block 303.

Finally the field is checked to determine whether it is a conditional field, as shown in block 303. The presence of a conditional field is dependent on one or more other fields. If the field is conditional, then the presence of the field or fields that it is dependent on must be verified in order to justify the presence of the conditional field. The verification is performed in block 304. If the condition is not satisfied (block 305), then an error is uncovered (block 306); if the condition upon which the conditional field is dependent is satisfied (block 305), then execution returns to block 290. Similarly, if the current field is not conditional, as determined in block 303, execution also returns to block 290, so that the next field in the current segment may be verified until the condition in block 290 is no longer satisfied and execution returns to the main program, as shown in block 305.

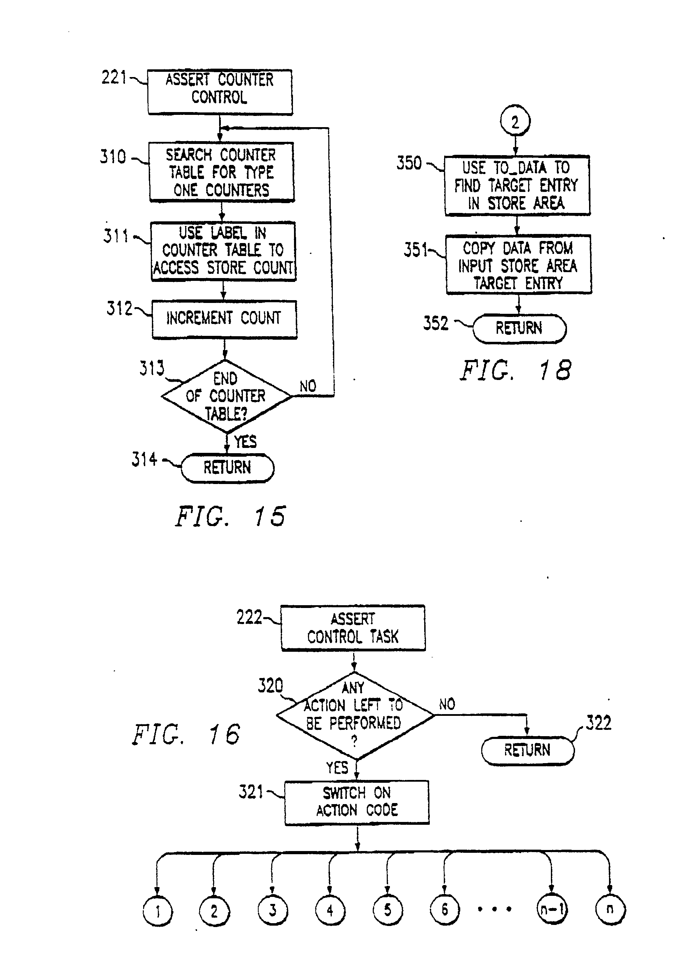

Assert counter control routine 221 is used to increment all type one counters, which counts the number of input segments read in to system 10. FIG. 15 shows assert counter control routine 221 in more detail and begins in block 310 to search counter table 160 for type one counters. Once found, the corresponding label in entry 161 of counter table 160 is used to access store table 164, where a pointer is pointed to the corresponding count value in the store areas, as shown in block 311. The count value is incremented by one, as shown in block 312. Subsequently, it is checked in block 313 to determine whether the end of counter table 160 has been reached, if not execution returns to block 310, so that the rest of counter table 160 may be searched. If the end has been reached, then execution returns in block 314.

Assert control task routine 222 shown in FIG. 16 executes the actions specified in action entry 124 of control table 122. A determination is first made, in block 320, whether any action is yet to be performed, and if so, depending on the action code in control table 122, one of a multitude of actions 1, 2, 3,..., n is selected and performed, as shown in block 321. If there are no more action codes left, execution returns to the main program, as shown in block 322.

FIGS. 17-35 shows the actions taken for each of the action codes 1-n. It is important to note that while each of the action codes is shown to represent an action to be taken, the assignment of action codes to a particular action is purely arbitrary and should not be construed to limit the present invention.

FIG. 17 shows the actions taken for action code 1, which indicates that data from control table 122 is to be used to FILL a particular field in the application record. Execution for action code 1 begins in block 330, which determines the target field and segment of the application record the data is to be passed to. Additionally, the length of the data is determined in block 331. Depending on the type of data the target field requires in the application record, the data may need to be converted into the correct data type. For example, data transmitted in the ANSI data format are ascii characters in personal computers or EBCDIC characters in mainframe computers, it is therefore necessary to make data conversions into signed or unsigned integers, or packed integers, for instance.

In block 332, the field type is examined to determine whether it is of type characters. If so, the character string is copied to the proper target field in the application record without requiring any conversion, as shown in block 333. Otherwise, if the target field type is determined to be numeric, as shown in block 334, then the character string is first converted to a number and the decimals are aligned in accordance with the application definition before copying it to the application record (block 335). If the target field requires data of type packed signed or unsigned numeric (block 336), the character string is converted to a number, decimal aligned, and then packed prior to copying it to the application record, as shown in block 337. After copying the data to the target field in the application record, an application data flag is set to equal "Y" to indicate that data exists in the application record, as indicated in block 338. If the target field is of any other type, then an error condition is identified, as shown in block 339. The execution returns to the main program in block 340.

Referring to FIG. 18, the action performed for action code 2 is STORE. In block 350, the label stored in to_data entry 128 in control table 122 is used to find a target entry in the store areas pointed to by a pointer in store table 164. If the target entry is not found, one is allocated. Using the pointer in store table 164 as indexed by the label in to data, a piece of data may be copied to the target entry in the store areas, as shown in block 351. Execution subsequently returns in block 352.

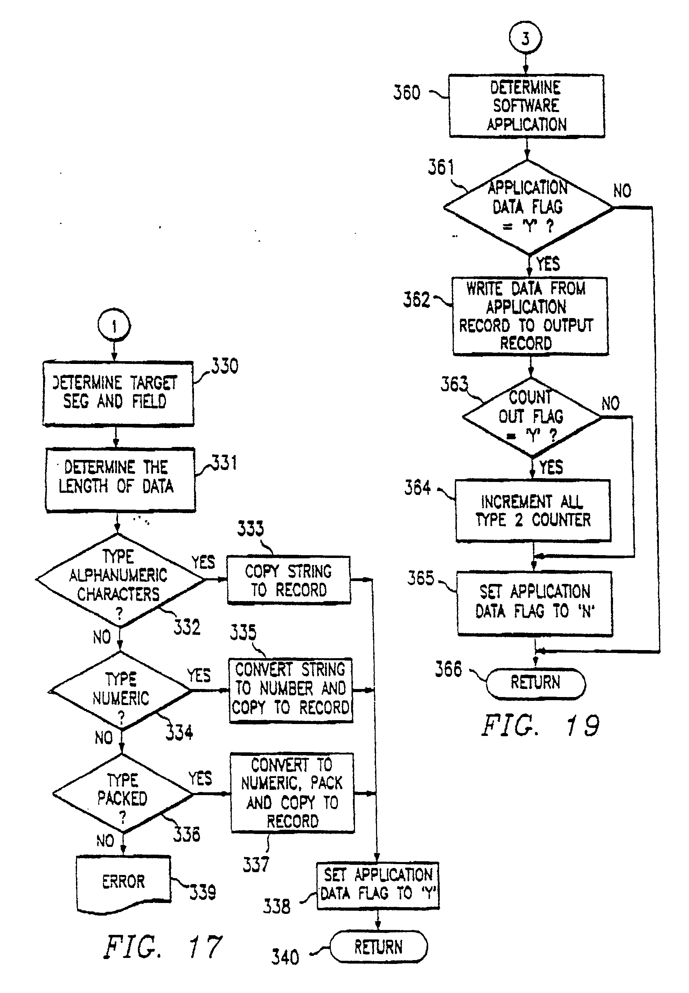

Referring to FIG. 19 where the action WRITE, represented by action code 3, is described in more detail. WRITE accomplishes the task of moving data from the application storage areas to the output file. This is performed by first determining the location or the record in the application storage areas the data is to be written from, as shown in block 360. An application data flag is checked to determine whether significant data is present in the source application record in block 361. If there are significant data present, then the data is mitten from the source application record to the target output record, as shown in block 362. In block 363, the count out flag is checked to determine whether it is equal to "Y." If the flag is equal to "Y," then all type two counts are incremented, as shown in block 364. Counters of type two keep track of the number of output records. Either way, execution proceeds to block 365 where the appropriate application data flag is set to "N" to indicate that no data exist in the source application record. Execution then returns in block 366. Similarly, if the application data flag is determined to be "N" in block 361, then no significant data is present in the source application record, therefore execution simply returns without writing data to the output.

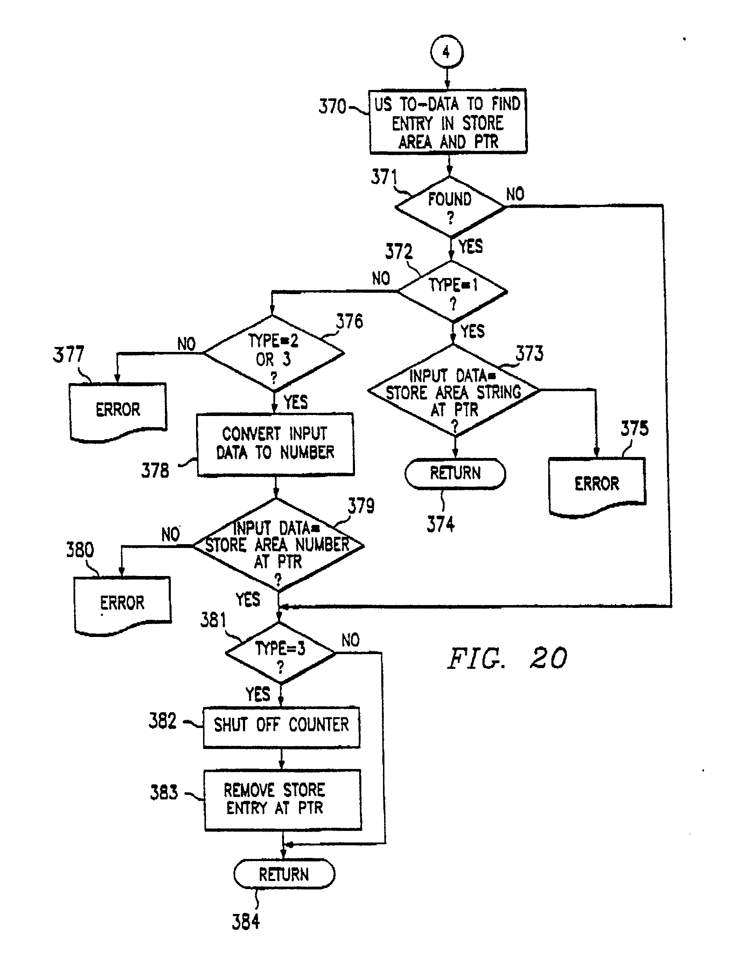

Referring to FIG. 20, a flowchart for action code 4 representing the action MATCH is shown. Action MATCH attempts to match a piece of data in the input storage areas to a piece of data in the store areas. In block 370, the label in entry to_data 128 of control table is used to find a corresponding entry in the store areas, and a store table pointer is returned pointing to that entry. If the corresponding entry is found, then type field 167 of the pointer is checked to determine whether it is of type one, which indicates type characters, as shown in block 372, If it is of type one, then the data in the input storage areas is compared with the string in the store areas being pointed to by the pointer, as shown in block 373 and the action is completed (block 374). If there is no match, the condition is noted in block 375.

If the condition in block 372 is not true, then execution proceeds to block 376, where the type is checked to determine whether it is equal to type two or three, both indicating type integers, but type three further indicating that there is an associated entry in count table 160. If the comparison is block 376 is negative, then execution simply returns, as shown in block 377, else, execution proceeds to block 378. In block 378, the input data is converted to an integer and is then compared with the integer in the store areas and pointed to by the store table pointer (block 379). If there is no match, then the matter is made note of, as shown in block 380.

If, in block 371, no store area entry is found using the to_data label, then execution jumps to block 381. Similarly, if there was a match in block 379, execution also goes to block 381, where the type is checked to see whether it is of type three. If it is, then an associated count table entry exists, and the counter is shut off in block 382. Furthermore, the corresponding store entry is also removed, as shown in block 383. Subsequently execution returns to the main program in block 384. If the store entry is not of type three, as indicated in block 381, then execution also returns.

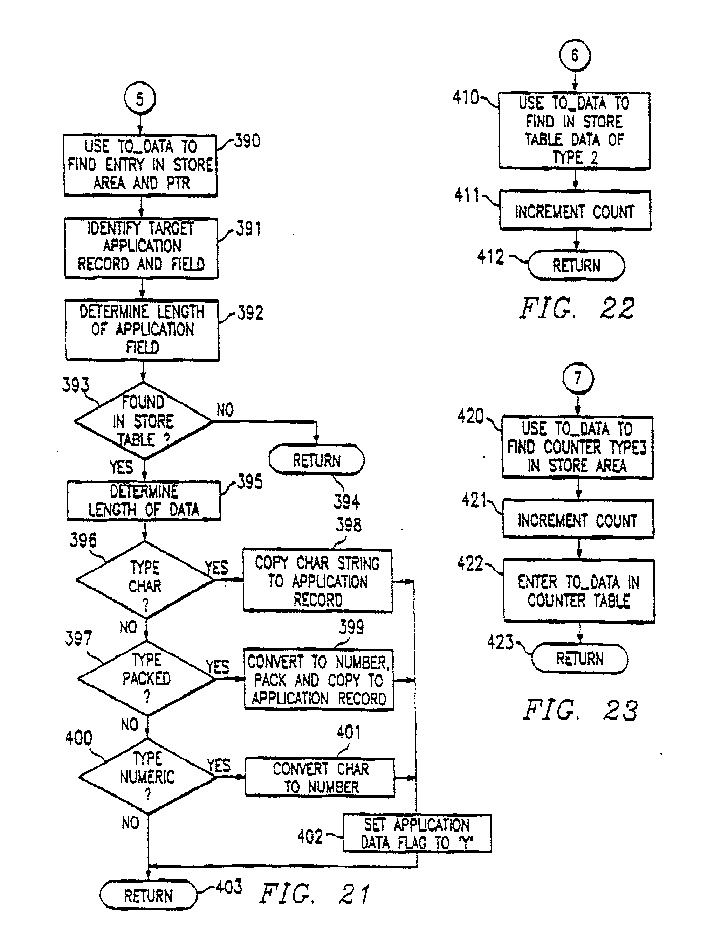

Action MOVE represented by action code 5 is shown in more detail in FIG. 21. Action MOVE performs the task of moving data from the store areas to the application storage areas. Beginning in block 390, the to_data label is used to find a corresponding store area entry as pointed to by a store table pointer. Additionally, the target application record and field are identified as indexed by values in to_record and to_field entries 126 and 127 in control table 122, as shown in block 391. Furthermore, the length of the target application field is determined in block 392. In block 393, a determination is made as to whether the data is located in the source store areas, and if not, execution simply returns (block 394), otherwise, the length of the data to be moved is determined in block 395.

Subsequently, in blocks 396 and 397, the application storage area data type is determined. If the data type is characters, as indicated in block 396, then the character string in the source store areas is copied to the target application record, as shown in block 398. If the data type is packed integer, as indicated in block 397, then the characters are converted to a number, which is subsequently packed and copied to the target application record in block 399. If the data type is numeric (block 400), then the characters are converted to a number and then copied to the application record, as shown in block 401. Proceeding to block 402, the corresponding application data flag is set to "Y" to indicate that significant data is present in the application record. Execution returns in block 403.

Referring to FIG. 22, action COUNT, represented by action code 6, is described in further detail. Action COUNT is used to count the occurrence of a certain serpent as it is being read in and processed. In block 410, the to data label in control table 122 is used to locate data of type two, indicating data of type numeric, in store table 164. Using the pointer of the corresponding type two found, the count value stored in the store areas is incremented by one, as shown in block 411 and execution returns in block 412.

COUNT ALL action, represented by action code 7, is used to count all occurrences of input serpents and is shown in more detail in FIG. 23. Similarly, the to data label is used to locate data of type three in store table 164, as shown in block 420. The count value, which is stored in the store areas, is incremented by one in block 421 and the to_data label is inserted into counter table 160 in an entry 161, as shown in block 422. Execution subsequently returns in block 423.

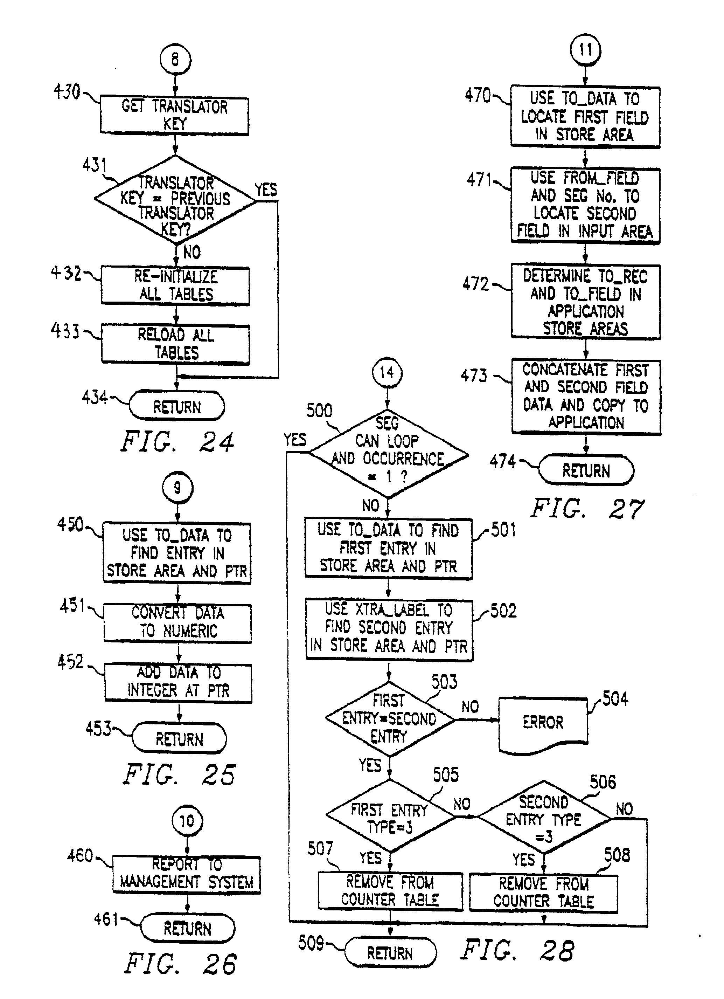

Action LOAD, represented by action code 8, is shown in FIG. 24 and begins in block 430. A unique translator key, the formulation of which is dependent on electronic transmission information, is obtained. The translator key is dependent on information such as the sender's identification, the receiver's identification, and the document's version and identification, which are contained within ISA and GS header segments 28 and 36 (FIG. 2) in the input file. The translator key is compared with the previous translator key in block 431, and if they do not match, then all transaction set and detailed serpent tables are re-initialized, as shown in block 432. The information for the transaction set and detailed segment tables are subsequently reloaded, as shown in block 433. Execution returns in block 434. If the keys do match, execution also returns.

Referring to FIG. 25, action SUM represented by action code 9 is shown in more detail. SUM performs the task of adding a data in the input storage areas to a data in the store areas. Beginning in block 450, the to_data label in control table 122 is used to find or allocate the appropriate entry in the store areas. The input data is converted into a number, as shown in block 451 and then added to the number in the store areas pointed by the pointer, as shown in block 452. The task is thus completed and execution returns in block 453.

Referring to FIG. 26, action LOG represented by action code 10 is shown. Action LOG performs the task of reporting appropriate data and summaries to a management system, as shown in block 460. Because the type of data to be logged and the dependency on the management system hardware and software, details of the LOG action is not described herein and may be implemented accordingly.

JOIN action shown in FIG. 27 and represented by action code 11 is used to join the data in two fields. In block 470, the to_data label is used to locate the first field in the store areas. In block 471, from_field entry 123 and the segment number are used to locate the second field, which is stored in the input storage areas. The target record and field location in the application storage areas are determined by using to_rec and to_field entries 126 and 127, as shown in block 472. The data in the two fields are concatenated, with the data in the first field first and the data in the second field second, as shown in block 473. Execution returns in block 474.

A variation on the JOIN action is to concatenate the data from the input areas first and the data from the store areas second. This is the JOIN 2 action represented by action code 12 (not shown).

Another variation is the action SPLIT. SPLIT is represented by action code 13 and takes a partial piece of data from a specified field in either the input storage areas or the store areas and moves it to a specified application record and field. The SPLIT action may be implemented in accordance with the present invention without further description, therefore, the details thereof will not be discussed further.

Referring to FIG. 28, action COMPARE STORE DATA (action code 14), which performs the task of comparing two data in the store areas, is shown in more detail. In block 500, if the segment can loop and the loop occurrence is equal to one, then this action is skipped and execution returns. Since action COMPARE STORE DATA may be called at the beginning of a loop where only one piece of data is available, and the other piece of data is still to be read in, the loop information is checked to see whether this is the case. Otherwise, execution proceeds to block 501, where the to_data label is used to find the first entry in the store areas. The second store area entry is found by using a second label, which is the label in extra label entry 125 in control table 122, as shown in block 502. The data in the first entry is compared with the data in the second entry in block 503, and if they are not equal, then an error has occurred (block 504). If they are equal, then the data type in the first entry is checked in block 505 and the data type in the second entry is checked in block 506. If either data type is of type three, then its associated entry in counter table 160 are removed, as shown in block 507 and 508. Execution returns in block 509.

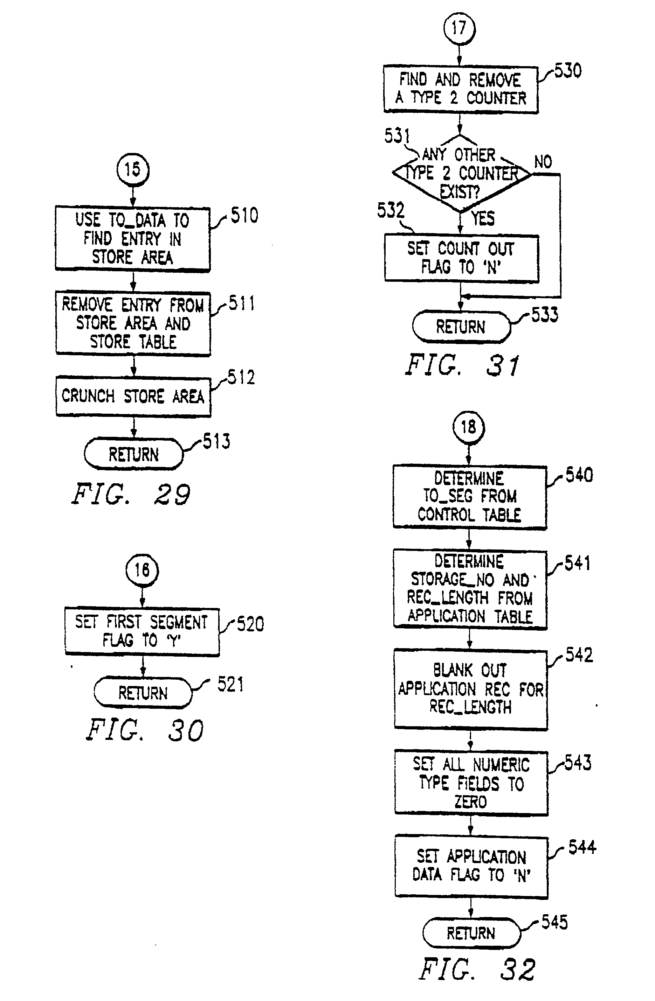

Action code 15 represents action REMOVE FROM STORE, and a flowchart thereof is shown in FIG. 29. REMOVE FROM STORE action is used to remove a particular entry from the store areas. In block 510, the to_data label is used to find the appropriate entry in the store areas. The entry is deleted from the store areas and its associated store table entry is also removed, as shown in block 511. Subsequently, the entries in the store areas are effectively crunched to avoid having invalid entries and to save memory space (block 512). This marks the completion of the action and execution returns in block 513.

Action SET FIRST SEGMENT FLAG, as shown in FIG. 32, represented by action code 16 performs the simple task of setting the flag which indicates whether the very last segment of a interchange envelope is being read in or processed, in order to reset the flag for the next envelope, as shown in block 520. Execution returns in block 521.

Referring to FIG. 31, action code 17 representing action TURN OFF COUNT OUTPUT and begins in block 530, where counter table 160 is searched for a type two counters and is removed if found. If any other type two counter is found in the rest of counter table 160 (block 531), then set the count out flag to "N" to indicate that no output records are being counted, as shown in block 532, and execution returns in block 533. If no type two counters are found the action ends in block 533.

Referring to FIG. 32, action INIT FIELD represented by action code 18 begins in block 540 by determining the output record number in to_rec entry 126 in control table 122. Subsequently, the storage number and the application record length are determined using the output record number as an index into application table 110. The application record is blanked out for the length determined in block 541 by entering blanks, as shown in block 542. Additionally, all application fields of type numeric and packed are reset to zero or packed zeros, as shown in block 543, and the application data flag is set to "N" as shown in block 544. Execution returns in block 545.

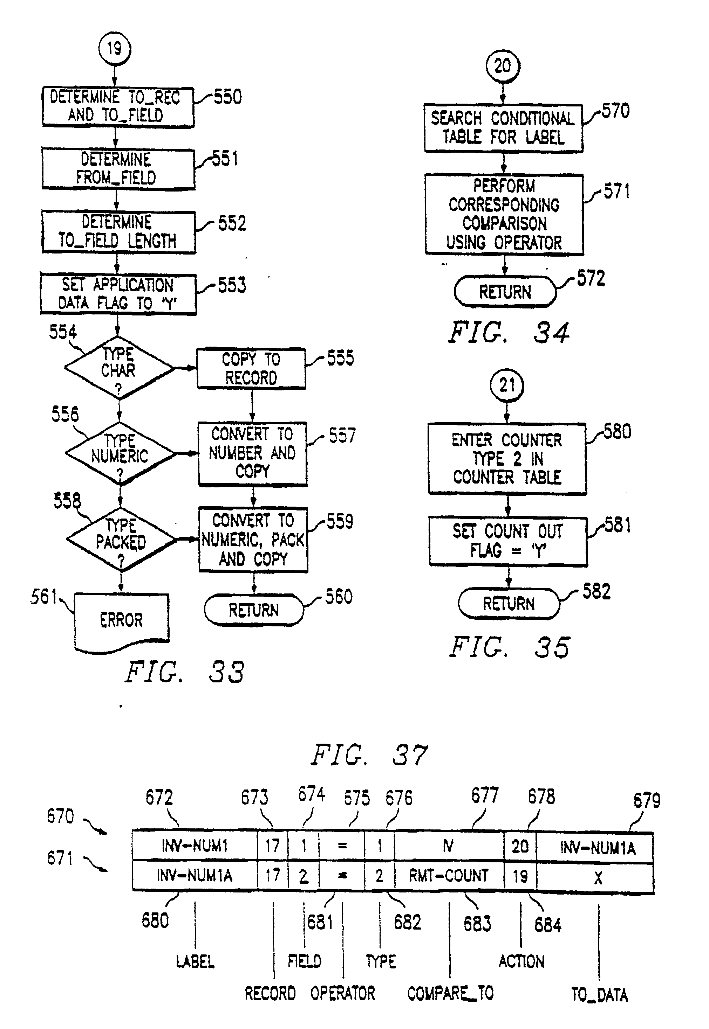

Referring to FIG. 35, action MAP, as represented by action code 19, begins by determining the target record and field by referring to entries 126 and 127 of control table 122, as shown in block 550. The source field is also determined and by referring to entry 123 of control table 122, as shown in block 551. The target field length is further determined so that the data mapped thereto would be modified to fit the length of the field (block 552). The application data flag is set equal to "Y" to indicate that significant data is, or in this case will, present in the corresponding application record, as shown in block 553. The target field type is checked. If it is of type characters (block 554), then the data is copied to the application records (block 555); if it is of type numeric (block 556), then the data is first converted to a number, the decimal places aligned, and then copied (block 557); if it is of type packed integer (block 558), then it is converted to a number, the decimals aligned, packed and then copied (block 559). Execution subsequently returns in block 560. If, however, it is not any of the aforementioned types, then an error condition is identified, as shown in block 561.

Action code 20 represents action CONDITIONAL and is shown in FIG. 34. As shown in block 570, the to _data label from control table 122 is used to match entry 131 of conditional table 130 and to locate the corresponding entry in conditional table 130. Once found the corresponding comparison as specified in the conditional table entry is performed using an operator (entry 134) and data to be compared to (entry 136) also specified in conditional table 130, as shown in block 571. Execution then returns in block 572.

Referring to FIG. 35, action COUNT OUT as represented by action code 21 is shown. A counter of type two is entered in counter table 160, its name, type and pointer are allocated in the store table and its corresponding count value entry is also allocated in the store area, as shown in block 580. The count out flag is set to equal "Y" to indicate output records are being counted. Execution returns in block 582.

Finally, action FILL INSIGNIFICANT (not shown) represented by action code 22 is similar to action FILL (action code 1) but the application data flag is not set to "Y" to indicate that the data in the record are not significant.

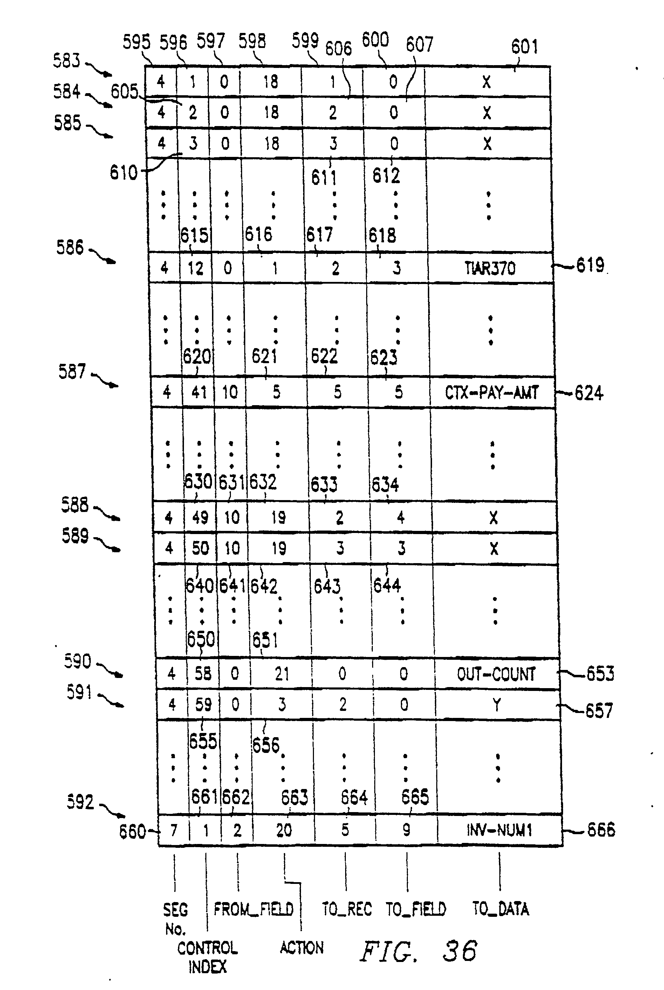

In operation, after a segment's order and content have been validated, the actions in control table 122 associated with that segment are executed. Referring to FIG. 36, portions of control table 122, including exemplary entries 583-593, for a payment order or remittance advice transaction set, which was shown in TABLE 1, are shown. Please also refer to FIG. 5 for the structure of control table 122. As described above, control table 122 may be indexed by the segment number, which is the order that the segment appears in the transmission envelope, and a control index, which is an index used to access one of a list of control entries for each segment. The segment number and control index entries are in the first and second columns of control table 122, respectively. In the third column are from_field entries 123; in the fourth column are action code entries 124; in the fifth column are to_record entries 126; in the sixth column are to_field entries 127; and in the seventh column are to_data entries 128.

Segment number entry 595 of the first control table entry 583 indicates that the associated segment is of segment order 4 or the BPS segment. Control index entry 596 thereof indicates that entry 583 is the first control entry for the BPS segment. Furthermore, action code entry 598 and to_rec entry 599 indicate action INIT FIELD (action code 18) and record one, which commands initializing of application record one. In this case, the from_field entry 597, to_field entry 600 and to_data label in entry 601 are ignored. Similarly, second control table entry 584 commands INIT FIELD (action code 18) of application record two (entry 606). Third control table entry 585 additionally commands that action INIT FIELD (action code 18) be performed on application record three (entry 611).

Entry 586 of control table 122 is also associated with the BPS segment, and is the twelfth control entry for that segment, as shown in entry 615. Action entry 616 indicates FILL (action code 1), entries 616 and 617 indicate the target application record and field, and entry 619 indicates the data (TIAR370) that is to be used to fill the target field.

Entry 587 of control table 122 is the forty-first control entry (entry 620) for the BPS segment and commands action MOVE (action code 5, entry 621). The label CTX-PAY-AMT is used to match the name in store table name entry 161. Once located, the corresponding pointer of the store name is used to access the data from the store areas and moved to application record five (entry 622), field five (entry 623).

The forty-ninth control entry (entry 630) for the BPS segment is shown in control table 588 and commands that a piece of data be mapped or copied (MAP, action code 19, entry 631) from field ten (entry 631) of the input storage area to record two (entry 633), field four (entry 634) of the application storage areas. The next control entry 589 commands that the same data also be copied to application record three, field three, as indicated by entries 641-644.

Control table entry 590 is the forty-eighth control entry for segment BPS, as shown in entry 650. The action code 22 shown in entry 651 indicates the COUNT OUTPUT action (action code 21). Further provided is a to _data label OUT-COUNT in entry 653, which is used to index into store table 164 to obtain a pointer that points the space where the count value will be stored in the store areas. The OUT-COUNT label is entered into an entry 161 in counter table 160, and the corresponding type is set to equal two. Additionally, the count out flag is set to "Y."

Control table entry 591 calls for the WRITE action, as indicated by action code 3 in entry 656. This entry writes the data that is present in application record two to an output file. The "Y" in entry 657 simply indicates that a carriage return is desired at the end of the record.

Control table entry 592 is associated with segment REF, as indicated by the segment number seven in entry 660. Entry 661 further indicates that this is the first control entry for segment REF. Action code 20 in entry 663 indicates a CONDITIONAL action and the label in entry 666, "INV-NUM1", refers to an entry in conditional table 130.

Referring to FIG. 37, a relevant portion of conditional table 130 is shown. Entry 670 in conditional table 130 includes an entry 672 that contains the label "INV-NUM1", which matches the label in entry 666 of control table 122. Entry 670 further indicates that the data stored in segment 17 (entry 673), field 1 (entry 674) of the input storage area is to be compared to the data "IV" in entry 677, to see whether they are equal, as specified by an "=" operator in entry 675. Note that the number 1 in entry 676 indicates that the label "IV" in entry 677 is to be used, and not as a label used to search store table 164. If the comparison determines that the two pieces of data match, then the action in entry 678, which is the CONDITIONAL action (action code 20) is to be executed. Label "INV-NUM1A" in entry 679 is used to match another entry in conditional table 122, since the second action is also CONDITIONAL. Label "INV-NUM1A" matches the label in entry 680 of conditional table entry 671. This time, the values in entries 681, 682 and 683 specifies that a comparison is to be made between the data in store table 164 corresponding to the label "RMT-COUNT" and the data in segment 17, field 2 of the input storage area. If the two data are equal, then the action specified in entry 684 of the second conditional statement is performed. Action code 19 in entry 684 calls for mapping the data in field 2, as indicated in from_field entry 662 of control table 122, to record 5, field 9, as indicated in entries 664 and 665, respectively.

From the foregoing, it will be seen that once the input segment and field is validated, the data contained therein are moved from input file 185 (FIG. 6) to store areas 188, which include the input storage areas and the store areas (FIG. 7). The data in the store areas 188 are then assembled and moved to application records and fields in application store areas 189 (FIG. 6). In addition, data also move between store areas 188 and application store areas 189. Finally, the application records are provided as output. The store areas 188 are necessary to hold data as they arrive, since electronic data conversion system 10 is a single pass system.

Having observed the details of the inbound data conversion process from a standard format such as ANSI to an internal format, attention may now be given to the outbound data conversion process. To convert data in the internal formats to standard formats, the data validation and conversion processes as described above are performed essentially in reverse. In other words, the data are first stored in application store area 189 (FIG. 6) as they are received, and are moved subsequently to the store areas and finally assembled and moved to the segments and fields of the input storage areas (now used as output storage areas) for output. Details of the outbound data conversion process will not be described fully herein for the outbound process implementation may be easily derived from the inbound process implementation.

Although the present invention has been described in detail, it should be understood that various changes, substitutions and alterations can be made hereto without departing from the spirit and scope of the invention as defined by the appended claims.

## Claims

1. A reference voltage generation circuit having precisely controllable temperature/voltage characteristics, said circuit comprising:
    an output for supplying said voltage,
    a first current source for supplying a current independent of supply voltage,
    a first current for supplying a constant voltage, said first circuit dependent upon current from said first current source,
    a second current source for supplying current which increases as temperature increases,
    a third current source for supplying current which decreases as temperature increases, and
    circuitry for mixing said second and third currents to produce a resulting voltage at said output having controllable voltage characteristics as a function of temperature.

2. The circuit set forth in claim 1 wherein said mixing circuit includes a resistive element.

3. The circuit set forth in claim 2 wherein said second current source includes
    a plurality of parallel connected transistors, each having their bases, collectors and emitters, respectively connected in common, and wherein the common emitters are resistively connected to ground. The number of parallel connected transistors and resistors is variable depending upon the degree of change that is required and the magnitude of the desired output voltage level.

4. The circuit set forth in claim 2 wherein said third current source includes at least one resistor, the value of which is variable depending upon the degree of change that is required and the magnitude of the desired output voltage level.

5. The circuit set forth in claim 1 further comprising
    circuitry for remotely modifying the current derived from said second current source and from said third current source.

6. A method of providing a reference voltage having precisely controllable temperature/voltage characteristics, said method comprising the steps of
supplying said voltage on an output,
supplying a first current independent of supply voltage,
supplying a constant voltage, said current voltage dependent upon current from said first current supplying step,
supplying a second current which increases as temperature increases,
supplying a third current which decreases as temperature increases, and
mixing said second and third currents to produce a resulting voltage at said output having controllable voltage characteristics as a function of temperature.

7. The method set forth in claim 6 wherein said mixing step includes a resistive element.

8. The method set forth in claim 7 wherein said second current supplying step includes the step of
establishing a plurality of parallel connected transistors, each having their bases, collectors and emitters, respectively connected in common, and wherein the number of parallel connected transistors and resistors is variable depending upon the degree of change that is required and the magnitude of the desired output voltage level.

9. A circuit for converting from first logic on/off input levels to second logic output levels, said circuit including only positive voltages with respect to ground, said circuit comprising:
a threshold reference voltage measured positive with respect to ground, said reference voltage used to set the level for switching between said on and off levels;
an output node for driving said on/off output levels;
a control switch biased continuously in the conducting condition, said switch operable for providing high and low current to said output node; and
circuitry for quickly changing said control switch between said high and low current conditions dependent upon whether or not the voltage condition presented to said circuit input is above or below said reference voltage where above represents the logical on condition and below represents the logical off condition of an input signal.

10. The circuit set forth in claim 9 wherein said quickly changing circuitry includes:
a load control switch operable for controlling said control switch; and
wherein the threshold between said on and off condition of said input signal is controlled by said value of said threshold reference voltage and the switching point of said load control switch.

11. The circuit set forth in claim 10 wherein said load control switch is a gated transistor and wherein said threshold voltage is applied to the gate of said transistor via a current mirror circuit.

12. The circuit set forth in claim 10 further comprising:
circuitry for establishing a specific voltage level at said circuit output without regard to said input signal; and
circuitry for allowing said input signal to bypass said circuit and be presented directly to said CMOS circuit.

13. A circuit for converting from ECL logic on/off input levels to CMOS logic output levels, said circuit including only positive voltages with respect to ground, said circuit comprising:
a threshold reference voltage measured positive with respect to ground, said reference voltage used to set the level for switching between said on and off levels;
a control transistor switch biased continuously in the conducting condition, the emitter of said transistor resistively connected to the input of said circuit;
an output control node for driving the on/off output levels, said output node connected to the collector of said control transistor; and
circuitry for quickly changing said control node from high to low dependent upon whether or not the voltage condition presented to said circuit input is above or below said reference voltage.

14. The circuit set forth in claim 13 wherein said circuitry comprises:
a pair of transistor connected base to base and emitter to emitter, said base coupled to said input such that a change in input signal causes a large change in current at the collector of a first one of said transistors;

a load transistor connected to the collector of said control transistor and to said output node, said load transistor acting as a resistive path for said control transistor while in one state and acting as a high current source for said control transistor in a second state, said load transistor operable under control of said current change from said first transistor for quickly changing from one state to the other.

**15.** The circuit set forth in claim 14 further comprising:

a current mirror consisting of a pair of transistors, one of which is said load transistor; and

wherein said current change from said first transistor is communicated to said load transistor via the other transistor of said current mirror.

**16.** The circuit set forth in claim 15 further comprising:

a voltage compensation circuit for removing the effects of voltage variations in said positive supply voltage so as to maintain constant the current flowing through said load transistor, said compensation circuit including a transistor connected from said supply voltage to the gate of said load transistor.

**17.** The circuit set forth in claim 14 further comprising:

circuitry for establishing a specific voltage level at said circuit output without regard to said input signal; and

circuitry for allowing said input signal to bypass said circuit and be presented directly to said CMOS circuit.

**18.** The method of converting from first logic on/off input levels to second logic output levels while using only positive voltages with respect to ground, said method comprising the steps of:

establishing a threshold reference voltage measured positive with respect to ground, said reference voltage used to set the level for switching between said on and off levels;

driving said on/off output levels from an output node;

biasing a control switch so that it is continuously in the conducting condition, said switch operable for providing high and low current to said output node; and

quickly changing said control switch between said high and low current conditions dependent upon whether or not the voltage condition presented to said circuit input is above or below said established reference voltage, wherein above represents the logical on condition and below represents the logical of condition of an input signal.

**19.** The method set forth in claim 18 wherein said quickly changing step includes:

controlling said control switch from a load control switch; and

wherein the threshold between said on and off condition of said input signal is controlled by said value of said threshold reference voltage and the switching point of said load control switch.

**20.** The method set forth in claim 19 wherein said load control switch is a gated transistor and wherein said method further includes the step of:

applying said threshold voltage to the gate of said transistor via a current mirror circuit.

**21.** The method set forth in claim 20 wherein said circuitry further comprises:

a pair of transistors connected base to base and emitter to emitter, said base coupled to said input such that a change in input signal causes a large change in current at the collector of a first one of said transistors, and wherein said method further includes the step of:

connecting said load control switch to said transistor pair and to said threshold voltage such that said load control switch operates under control of said current change from said first transistor for quickly changing from one state to the other.

**22.** The method of converting from ECL logic on/off input levels to CMOS logic output levels, said method including the steps of:

establishing a threshold reference voltage measured positive with respect to ground, said reference voltage used to set the level for switching between said on and off levels;

continuously biasing a control transistor switch in the conducting condition, the emitter of said transistor resistively connected to the input of said circuit;

driving the on/off output levels from an output control node, said output node connected to the collector of said control transistor; and

quickly changing said control node from high to low dependent upon whether or not the voltage condition presented to said circuit input is above or below said reference voltage.

**23.** The method set forth in claim 22 wherein there is a pair of transistors connected base to base and emitter to emitter, said base coupled to said input such that a change in input signal causes a large change in current at the collector of a first one of said transistors; and

a load transistor connected to the collector of said control transistor and to said output node, said load transistor acting as a resistive path for said control transistor while in one state and acting as a high current source for said control transistor in a second state, and wherein said method includes the step of:

operating said load transistor operable under control of said current change from said first transistor for quickly changing from one state to another.

FIG. 1

ANSI
EDIFACT
TDCC
PROPRIETARY
14
12
16
18
10
20
22
24
INTERNAL
STANDARD
FORMATS

FIG. 2

ISA * INTERCHANGE CONTROL HEADER 28

GS * FUNCTIONAL GROUP HEADER 36

44 ST * TRANSACTION SET HEADER 50

DETAILED SEGMENTS 62

SE * TRANSACTION SET TRAILER 56

46 ST * TRANSACTION SET HEADER 52

DETAILED SEGMENTS 64

SE * TRANSACTION SET TRAILER 58

FUNCTIONAL GROUP 32

GE * FUNCTIONAL GROUP TRAILER 40

GS * FUNCTIONAL GROUP HEADER 38

48 ST * TRANSACTION SET HEADER 54

DETAILED SEGMENTS 66

SE * TRANSACTION SET TRAILER 60

FUNCTIONAL GROUP 34

GE * FUNCTIONAL GROUP HEADER 42

INTERCHANGE ENVELOPE 26

IEA * INTERCHANGE CONTROL TRAILER 30

S*
BPS01 PMT METHOD CODE M ID 3/3
BPS02 AMOUNT M R 1/15
BPS03 TRANSACTION HANDLING CD M ID 1/1
BPS04 (DFI) ID No. QUALIFIER C ID 2/2
BPS05 (DFI) ID NUMBER C AN 3/12
BPS06 ACCOUNT NUMBER M AN 1/35
BPS07 ORIG COMP ID NUMBER C AN 10/10
BPS08 ORIG COMP SUPPL CODE M AN 9/9
BPS09 (DFI) ID No. QUALIFIER C ID 2/2
BPS10 (DFI) ID NUMBER C AN 3/12
BPS11 ACCOUNT NUMBER C AN 1/35
BPS12 EFFECTIVE ENTRY DATE C DT 6/6
BPS13 SETTLEMENT DATE C DT 6/6
N/L
70
71
72
73
74
75
76
77
78
79
80
81
82
83
84
85
86
87
88
CONVERSION RULES
STORE AREAS
APPL STORE AREA
RULES
DATA
DATA
INPUT FILE
SEGMENT FIELDS
CONVERT
APPLICATION RECORDS
OUTPUT FILE
185
186
187
188
189
190

FIG. 3

FIG. 6

FIG. 4
100
START
101
INITIALIZE VARIABLES AND TABLES
201
OPEN INPUT FILES
202
INPUT FILE
203
READ FIRST RECORD
204
IDENTIFY ENVELOPE TO LOAD
205
LOAD ENVELOPE DATA INTO TABLES
206
OPEN OUTPUT FILE
207
OUTPUT FILE
208
WHILE- DATA IN INPUT FILE
209
FIRST RECORD ?
NO
YES
210
GET SEG AND FIELD TERM CHARACTER
211
READ UNTIL END OF SEG FOUND
A
A
212
PARSE INPUT
213
FIND NEXT SEGMENT
214
IDENTIFY SEGMENT
215
IS NEW SEG# >=0
NO
YES
216
IS TYPE= FLOATING
NO
YES
218
SET LOOP INFO
217
FLOATING SEG
VALIDATE SEG ORDER
219
220
VALIDATE SEG FIELDS
221
ASSERT COUNTER CONTROL
222
ASSERT CONTROL TASK
223
END

APPLICATION RECORD
RECORD_ID
REC_LENGTH
STORAGE_NO
DATA
FIELD
OFFSET
LENGTH
TYPE
LOOP_LEVEL
LOOP_OCC
CONTROL
FROM_FIELD
ACTION
XTRA_LABEL
TO_DATA
TO_REC
TO_FIELD
CONDITIONAL
LABEL
SEG
FIELD
OPERATOR
TYPE
COMPARE_TO
ACTION
TO_DATA
ANSI
SEG
REQ
OCC
ORDER
AREA
LP_LEVEL
LP_COUNT
LP_END
MAX_LEN
STORE_NO
DATA
FIELD
REQUIRE
TYPE
MIN
MAX
ID_NO
COUNTER
NAME
TYPE
STORE
NAME
PT
TYPE
LOOP
ORDER
ORDER_INDEX
LOOP_END
LOOP_COUNT
ID
ID_NO
ID_TYPE
ID_VALUE


FIG. 5

FIG. 7
COUNTER
160
122
201
TO_DATA
INDEX
TO_SEG
TO_FIELD
CNTL
TO_DATA
130
TO_DATA
TO_SEG
TO_FIELD
COND
LABEL
110
APPL
206
FROM_FIELD
198
202
205
STORAGE_NO
190
200
TO_DATA
TO_DATA
140
ANSI
164
APPL
STORAGE
AREAS
192
FIELD
INDEX
ORDER
204
STORE
PT
FIELDS
191
LOOP
170
INDEX
FIELD
NUM
195
INPUT
203
STORE
AREAS
193
180
IDS
194
INDEX
ID
VALUES
INPUT
STORAGE
AREAS
FIND NEXT SEGMENT
212
240
LAST
SEG EVALUATED=
NEXT MANDATORY
SEG
NO
YES
DETERMINE NEXT MADATORY SEG TO BE ENCOUNTERED USING RULES ABOUT ORDER AND LOOPING
241
242
IS
THERE A NEXT
MADATORY
SEG?
NO
243
YES
244
ASSIGN NEXT SEG PLACE HOLDER WITH INFO FROM ABOVE
RESET NEXT SEG PARAMETER TO INITIAL STATE
RETURN
FIG. 9
FIG. 8
PARSE INPUT
212
COUNT BYTES
230
IDENTIFY FIELDS USING TERMINATORS
231
ASSIGN POINTERS TO FIELDS USING TERMINATORS
232
RETURN
233

IDENTIFY SEGMENT
214
SEARCH ANSI TABLE FOR MATCH WITH FIRST FIELD OF CURRENT SEGMENT
250
FOUND ?
251
TYPE= FLOATING ?
253
IDENTIFY ERROR CONDITION
252
ASSIGN CURRENT SEG AND PREVIOUS SEG PLACE HOLDERS
254
ASSIGN CURRENT PLACE HOLDER
255
RETURN SEG NUMBER
256
RETURN
257
FIG. 10
FIG. 11
FLOATING SEG
217
PREV SEG TYPE= FLOATING
260
INCREMENT OCCURENCE # BY +1
261
SET OCCURANCE # TO 1
265
OCCURRENCE # > MAX ALLOWED
262
ERROR
263
RETURN
264
SET LOOP INFO
218
LOOPING ALLOW FOR THIS SEGMENT
270
LOOP EXISTS IN LOOP TABLE FOR THIS SEGMENT
271
ADD SEGMENT TO LOOP TABLE
273
LOOP LEVEL < PREVIOUS LOOP LEVEL
274
SET CURRENT LOOP IN LOOP TABLE TO 0
275
RETURN
272
FIG. 12

FIG. 13
218
VALIDATE SEG ORDER
270
CURRENT SEG NAME = NEXT EXPECTED NAME?
NO
YES
271
UPDATE TRAIL WITH CURRENT SEG NAME
272
SET TRAIL OCCURRANCE = 1
Z
273
CURRENT SEG=PREVIOUS SEG AND = TRAIL SEG?
NO
YES
274
TRAIL OCCURRANCE<= MAX ALLOWED ?
NO
YES
276
INCREMENT TRAIL OCCURRENCE
Z
ERROR
275
Z
277
CURRENT SEG # > PREV SEG AND < NEXT SEG
NO
YES
278
UPDATE TRAIL SEG NAME, SET TRAIL OCC. =1
Z
PREVIOUS LOOP LEVEL = CURRENT LOOP LEVEL?
279
NO
YES
280
CURRENT SEG NUMBER <= PREV SEG NUMBER?
NO
YES
284
ERROR
LOOP OCC. <=MAX AND PREV SEG LOOP LEVEL<=CURRENT LOOP LEVEL
281
NO
YES
282
DECREMENT LOOP COUNT OF CURRENT SEG LOOP LEVEL
283
ERROR
285
(CURRENT SEG NUMBER< PREV SEG NUMBER OR > NEXT) AND (CURRENT SEG LOOP LEVEL ORDER = LOOP TABLE ORDER VALUE
NO
YES
ERROR
286
Z
RETURN
287

VALIDATE SEG FIELDS
220
FIELD LEFT IN CURRENT SEG?
290
NO
YES
RETURN
307
RETURN FIELD MANDATORY ?
291
NO
YES
FIELD LENGTH=0 ?
292
NO
YES
ERROR
293
FIELD LENGHT<MIN OR MAX AND =0 ?
294
NO
YES
ERROR
295
FIELD TYPE IS ID?
296
NO
YES
ID # IN ID TABLE ?
297
NO
YES
ERROR
298
ID VALUE = * ?
299
NO
YES
SEARCH ID VALUES FOR A MATCH
300
MATCH ?
301
YES
NO
ERROR
302
FIELD CONDITIONAL ?
303
YES
REFER TO TABLE TO DETERMINE CONDITION
304
CONDITION SATISFIED ?
305
YES
NO
ERROR
306
FIG. 14

221
ASSERT COUNTER CONTROL
310
SEARCH COUNTER TABLE FOR TYPE ONE COUNTERS
311
USE LABEL IN COUNTER TABLE TO ACCESS STORE COUNT
312
INCREMENT COUNT
313
END OF COUNTER TABLE?
NO
YES
314
RETURN
2
350
USE TO_DATA TO FIND TARGET ENTRY IN STORE AREA
351
COPY DATA FROM INPUT STORE AREA TARGET ENTRY
352
RETURN

FIG. 15

FIG. 18

222
ASSERT CONTROL TASK
320
ANY ACTION LEFT TO BE PERFORMED ?
NO
322
RETURN
YES
321
SWITCH ON ACTION CODE
1
2
3
4
5
6
. . .
n-1
n

FIG. 16

1
DETERMINE TARGET SEG AND FIELD
330
DETERMINE THE LENGTH OF DATA
331
TYPE ALPHANUMERIC CHARACTERS ?
332
YES
NO
COPY STRING TO RECORD
333
TYPE NUMERIC ?
334
CONVERT STRING TO NUMBER AND COPY TO RECORD
335
TYPE PACKED ?
336
CONVERT TO NUMERIC, PACK AND COPY TO RECORD
337
ERROR
339
SET APPLICATION DATA FLAG TO 'Y'
338
RETURN
340
3
DETERMINE SOFTWARE APPLICATION
360
APPLICATION DATA FLAG = 'Y' ?
361
WRITE DATA FROM APPLICATION RECORD TO OUTPUT RECORD
362
COUNT OUT FLAG = 'Y' ?
363
INCREMENT ALL TYPE 2 COUNTER
364
SET APPLICATION DATA FLAG TO 'N'
365
RETURN
366

FIG. 17

FIG. 19

4
370
US TO-DATA TO FIND ENTRY IN STORE AREA AND PTR
371
FOUND ?
NO
YES
372
TYPE=1 ?
NO
YES
376
TYPE=2 OR 3 ?
NO
377
ERROR
YES
CONVERT INPUT DATA TO NUMBER
378
373
INPUT DATA= STORE AREA STRING AT PTR ?
375
ERROR
RETURN
374
379
INPUT DATA= STORE AREA NUMBER AT PTR ?
NO
380
ERROR
YES
381
TYPE=3 ?
NO
YES
382
SHUT OFF COUNTER
383
REMOVE STORE ENTRY AT PTR
RETURN
384

FIG. 20

5
USE TO_DATA TO FIND ENTRY IN STORE AREA AND PTR
390
IDENTIFY TARGET APPLICATION RECORD AND FIELD
391
DETERMINE LENGTH OF APPLICATION FIELD
392
393
FOUND IN STORE TABLE ?
NO
RETURN
394
YES
DETERMINE LENGTH OF DATA
395
396
TYPE CHAR ?
YES
COPY CHAR STRING TO APPLICATION RECORD
398
NO
397
TYPE PACKED ?
YES
CONVERT TO NUMBER, PACK AND COPY TO APPLICATION RECORD
399
NO
400
TYPE NUMERIC ?
YES
CONVERT CHAR TO NUMBER
401
NO
402
SET APPLICATION DATA FLAG TO 'Y'
RETURN
403
6
410
USE TO_DATA TO FIND IN STORE TABLE DATA OF TYPE 2
411
INCREMENT COUNT
412
RETURN
7
420
USE TO_DATA TO FIND COUNTER TYPE3 IN STORE AREA
421
INCREMENT COUNT
422
ENTER TO_DATA IN COUNTER TABLE
423
RETURN
FIG. 21

FIG. 22

FIG. 23

8
430
GET TRANSLATOR KEY
431
TRANSLATOR KEY = PREVIOUS TRANSLATOR KEY?
YES
NO
432
RE-INITIALIZE ALL TABLES
433
RELOAD ALL TABLES
434
RETURN
9
450
USE TO_DATA TO FIND ENTRY IN STORE AREA AND PTR
451
CONVERT DATA TO NUMERIC
452
ADD DATA TO INTEGER AT PTR
453
RETURN
10
460
REPORT TO MANAGEMENT SYSTEM
461
RETURN
11
470
USE TO_DATA TO LOCATE FIRST FIELD IN STORE AREA
471
USE FROM_FIELD AND SEG No. TO LOCATE SECOND FIELD IN INPUT AREA
472
DETERMINE TO_REC AND TO_FIELD IN APPLICATION STORE AREAS
473
CONCATENATE FIRST AND SECOND FIELD DATA AND COPY TO APPLICATION
474
RETURN
14
500
SEG CAN LOOP AND OCCURRENCE = 1 ?
YES
NO
501
USE TO_DATA TO FIND FIRST ENTRY IN STORE AREA AND PTR
502
USE XTRA_LABEL TO FIND SECOND ENTRY IN STORE AREA AND PTR
503
FIRST ENTRY=SECOND ENTRY
NO
504
ERROR
YES
505
FIRST ENTRY TYPE=3
NO
506
SECOND ENTRY TYPE =3
NO
507
YES
YES
508
REMOVE FROM COUNTER TABLE
REMOVE FROM COUNTER TABLE
509
RETURN

FIG. 24

FIG. 25

FIG. 26

FIG. 27

FIG. 28

15
USE TO_DATA TO FIND ENTRY IN STORE AREA
510
REMOVE ENTRY FROM STORE AREA AND STORE TABLE
511
CRUNCH STORE AREA
512
RETURN
513
16
SET FIRST SEGMENT FLAG TO 'Y'
520
RETURN
521
17
FIND AND REMOVE A TYPE 2 COUNTER
530
531
ANY OTHER TYPE 2 COUNTER EXIST?
NO
YES
532
SET COUNT OUT FLAG TO 'N'
RETURN
533
18
DETERMINE TO_SEG FROM CONTROL TABLE
540
DETERMINE STORAGE_NO AND REC_LENGTH FROM APPLICATION TABLE
541
BLANK OUT APPLICATION REC FOR REC_LENGTH
542
SET ALL NUMERIC TYPE FIELDS TO ZERO
543
SET APPLICATION DATA FLAG TO 'N'
544
RETURN
545

FIG. 29

FIG. 30

FIG. 31

FIG. 32

19

DETERMINE TO_REC AND TO_FIELD 550

DETERMINE FROM_FIELD 551

DETERMINE TO_FIELD LENGTH 552

SET APPLICATION DATA FLAG TO 'Y' 553

554 TYPE CHAR ?

COPY TO RECORD 555

556 TYPE NUMERIC ?

CONVERT TO NUMBER AND COPY 557

558 TYPE PACKED ?

CONVERT TO NUMERIC, PACK AND COPY 559

561 ERROR

RETURN 560

FIG. 33

20

SEARCH CONDITIONAL TABLE FOR LABEL 570

PERFORM CORRESPONDING COMPARISON USING OPERATOR 571

RETURN 572

FIG. 34

21

ENTER COUNTER TYPE 2 IN COUNTER TABLE 580

SET COUNT OUT FLAG = 'Y' 581

RETURN 582

FIG. 35

672
673
674
675
676
677
678
679
670
671
INV-NUM1 | 17 | 1 | = | 1 | N | 20 | INV-NUM1A
INV-NUM1A | 17 | 2 | = | 2 | RMT-COUNT | 19 | X
680
681
682
683
684
LABEL
RECORD
FIELD
OPERATOR
TYPE
COMPARE_TO
ACTION
TO_DATA

FIG. 37

595
596
597
598
599
606
600
607
601
583
584
605
585
610
611
612
615
616
617
618
586
619
620
621
622
623
587
624
630
631
632
633
634
588
589
640
641
642
643
644
650
651
590
653
591
657
655
656
661
662
663
664
665
592
660
666
4 1 0 18 1 0 X
4 2 0 18 2 0 X
4 3 0 18 3 0 X
4 12 0 1 2 3 TIAR370
4 41 10 5 5 5 CTX-PAY-AMT
4 49 10 19 2 4 X
4 50 10 19 3 3 X
4 58 0 21 0 0 OUT-COUNT
4 59 0 3 2 0 Y
7 1 2 20 5 9 INV-NUM1
SEG No.
CONTROL INDEX
FROM_FIELD
ACTION
TO_REC
TO_FIELD
TO_DATA

*FIG. 36*